# EUROPÄISCHE PATENTSCHRIFT

(11) **EP 2 243 606 B1**
(45) Veröffentlichungstag und Bekanntmachung des Hinweises auf die Patenterteilung: **22.02.2017**
(21) Anmeldenummer: 10004183.9
(22) Anmeldetag: 20.04.2010
(51) Int. Cl.: B27M 1/08, B27D 3/04, B27D 1/10, B65G 47/64

(54) **Anlage zur Herstellung von Platten aus Lamellen aus Holz sowie Verfahren zur Herstellung solcher Platten**
Assembly for producing boards from wooden lamellae and method for producing such boards
Installation de fabrication de plaques en lamelles de bois et procédé destiné à la fabrication de telles plaques

(30) Priorität: 24.04.2009 DE 102009019512
(43) Veröffentlichungstag der Anmeldung: 27.10.2010
(73) Patentinhaber: GreCon Dimter Holzoptimierung Süd GmbH & Co. KG, 89257 Illertissen (DE)
(72) Erfinder: Jung, Erhard, 89281 Altenstadt (DE); Uhl, Markus, 89186 IIIerrieden (DE); Veit, Thomas, 89335 Ichenhausen (DE)
(74) Vertreter: Kohl, Karl-Heinz

(56) Entgegenhaltungen:
- WO-A1-2005/021410
- WO-A1-2009/124544
- US-A- 3 723 230
- US-A- 4 356 045
- US-A- 5 088 533
- US-A- 5 088 533

## Beschreibung

Die Erfindung betrifft eine Anlage zur Herstellung von Platten aus Lamellen aus Holz nach dem Oberbegriff des Anspruches 1 sowie ein Verfahren zur Herstellung solcher Platten nach dem Oberbegriff des Anspruches 13.

Eine solche Anlage und ein solches Verfahren sind aus dem Dokument US5088533A1 bekannt.

Es ist bekannt, Holzlamellen in einer Anlage wenigstens einer Leimauftragseinheit zuzuführen, die Leim an eine Längsseite der Lamelle aufbringt. Anschließend werden die so beleimten Lamellen mit ihren Längsseiten aneinanderliegend in der Presseinheit zu einem Lamellenpaket verpresst.

Der Erfindung liegt die Aufgabe zugrunde, die gattungsgemäße Anlage und das gattungsgemäße Verfahren so auszubilden, dass die Platten aus den Lamellen in einfacher und zuverlässiger Weise hergestellt werden können. Diese Aufgabe wird bei der gattungsgemäßen Anlage erfindungsgemäß mit den kennzeichnenden Merkmalen des Anspruches 1 und beim gattungsgemäßen Verfahren erfindungsgemäß mit den kennzeichnenden Merkmalen des Anspruches 13 gelöst.

Die erfindungsgemäße Anlage weist im Transportweg zur Leimauftragseinheit den Etagenförderer auf, der mit wenigstens zwei unterschiedlichen Transporteinheiten versehen ist. Die Lamellen können mit Hilfe der Weiche wahlweise auf die einzelnen Transportwege verteilt werden. So ist es beispielsweise möglich, über die unterschiedlichen Transporteinheiten des Etagenförderers Lamellen unterschiedlicher Qualität zu transportieren. So können nahezu zeitgleich Lamellen geringerer Qualität auf die eine Transporteinheit und Lamellen mit höherer Qualität auf die andere Transporteinheit gefördert werden. Dadurch ergibt sich eine sehr hohe Taktzeit der erfindungsgemäßen Anlage. Mit der Weiche können die Lamellen unterschiedlicher Qualität in einer bestimmten Reihenfolge hintereinander zur Bildung des gewünschten Lamellenpaketes weitertransportiert werden. So kann die Reihenfolge der Lamellen unterschiedlicher Qualität so gewählt werden, dass die herzustellenden Platten an ihren Außenseiten jeweils eine Lamelle mit einer hohen Qualität, das heißt ohne Äste oder anderen Fehlern, aufweisen, während die Lamellen zwischen diesen beiden Außenlamellen eine geringere Qualität haben können. Die Weiche lässt sich einfach und rasch verstellen, um die Lamellen unterschiedlicher Qualität hintereinander in der gewünschten Reihenfolge weiterzutransportieren.

Die Transporteinheiten des Etagenförderers sind vorteilhaft mit Abstand übereinander angeordnet, so dass der Etagenförderer nur wenig Aufstellfläche benötigt.

Die Weiche, mit der die jeweilige Transporteinheit ausgewählt wird, weist vorteilhaft Antriebselemente auf, so dass die jeweiligen Lamellen aktiv transportiert werden.

Der Abstand zwischen den Weichen ist vorteilhaft verstellbar. Dadurch besteht die Möglichkeit, unterschiedlich lange Lamellen nahe ihren Enden zu stützen.

Die Antriebselemente sind vorteilhaft endlos umlaufend ausgebildet.

Bei einer vorteilhaften Ausgestaltung schließt der Etagenförderer an wenigstens eine Transporteinheit an, die einer Quertransporteinheit für die Lamellen vorgeschaltet ist. Auf dieser Transporteinheit werden die Lamellen der Quertransporteinheit zugeführt.

Die Quertransporteinheit ist vorteilhaft mit einer Seitenführung für die Lamellen versehen. Sie liegen an dieser Seitenführung an und können dadurch einwandfrei senkrecht zu ihrer bisherigen Transportrichtung in ihrer Längsrichtung weitertransportiert werden.

Ein zuverlässiger Längstransport der Lamellen ist gewährleistet, wenn die Seitenführung durch in Reihe nebeneinander angeordnete, um vertikale Achsen drehbare Rollen gebildet ist.

Die Lamellen werden durch wenigstens einen Mitnehmer in ihrer Längsrichtung längs der Seitenführung transportiert.

Der Mitnehmer führt die Lamellen vorteilhaft einzeln der Leimauftragseinheit zu.

Damit der Leim auf die eine Längsseite der Lamellen aufgebracht werden kann, werden diese im Bereich der Leimauftragseinheit zwischen drehbar angetriebenen Antriebsrollen transportiert, die die Lamellen an der Ober- und der Unterseite erfassen.

Die Antriebsrollen erteilen den Lamellen vorteilhaft eine höhere Transportgeschwindigkeit als der Mitnehmer. Dies hat den Vorteil, dass die Lamellen rasch vom Mitnehmer gelöst werden, so dass er sofort wieder zurück in die Ausgangsstellung gefahren werden kann, um die nächste Lamelle der Leimauftragseinheit zuzuführen.

Der Leimauftragseinheit ist vorteilhaft eine Umlenkeinheit nachgeschaltet, der die Lamellen nach der Leimbeaufschlagung zugeführt werden.

Die Umlenkeinheit dient dazu, die beleimten Lamellen quer zu ihrer Längsrichtung in Richtung auf die Presseinheit zu transportieren.

Die Umlenkeinheit weist vorteilhaft mit Abstand hintereinander liegende Schiebeleisten auf, mit denen die an einer Längsseite mit Leim beaufschlagten Lamellen quer zu ihrer Längsrichtung verschoben werden.

Damit die Lamellen eine genaue Ausrichtung erfahren, ist die Umlenkeinheit in vorteilhafter Weise mit wenigstens einem Anschlag versehen, der im Verschiebeweg der von der Leimauftragseinheit kommenden Lamellen liegt. Sie werden in ihrer Längsrichtung so weit transportiert, bis sie mit ihrer Stirnseite am Anschlag zur Anlage kommen. Auf diese Weise werden sämtliche Lamellen genau ausgerichtet.

Die Schiebeleisten der Umlenkeinheit sind bei einer einfachen Ausführungsform durch einen Endlosantrieb quer zu ihrer Längsrichtung bewegbar.

Die Umlenkeinheit ist vorteilhaft als Einheit gegenüber der Presseinheit in Längsrichtung der Lamellen bzw. in Transportrichtung der Lamellen in ihrer Längsrichtung verschiebbar. Dadurch können die Lamellen problemlos und genau mittig gegenüber der Presseinheit ausgerichtet werden, der die Lamellen anschließend zur Herstellung des Lamellenpakets zugeführt werden.

Die Umlenkeinheit ist vorteilhaft mit einem Transportband versehen, dessen Breite vorteilhaft wesentlich größer ist als der Abstand zwischen benachbarten Schiebeleisten der Umlenkeinheit.

Die Umlenkeinheit führt die Lamellen einer Transporteinheit zu, mit der die Lamellen der Presseinheit zugeführt werden. In der Presseinheit werden die mit ihren beleimten Längsseiten unter Druck aneinanderliegenden Lamellen zum Lamellenpaket gepresst.

Vorteilhaft ist die Transporteinheit mit mehreren nebeneinander liegenden Transportelementen versehen, die je nach Länge der Lamellen wahlweise in eine Außerbetriebsstellung verstellbar sind. Dadurch ist sichergestellt, dass die Lamellen stets nur auf zwei Transportelementen aufliegen. Diese aktiven Transportelemente bleiben in der Arbeitsstellung, während die anderen Transportelemente in die Außerbetriebsstellung verstellt werden.

Vorteilhaft befindet sich vor dem Einlauf der Lamellen in einem Vorschub der Presseinheit ein Schiebeschlitten mit einem vertikal verfahrbaren Anschlag. Er richtet in zyklischen Abständen die Lamellen rechtwinklig zur Vorschubrichtung aus.

Bei einer vorteilhaften Ausführungsform wird der Vorschub durch einen Kettenvorschub gebildet, der aus mehreren Plattenketten oben und unten besteht, die mit Servomotoren angetrieben werden. Vorteilhaft werden vier Servomotoren verwendet, die am Kettenvorschub rechts oben und unten sowie links oben und unten vorgesehen sind.

Um einen zuverlässigen Transport des Lamellenteppichs zu gewährleisten, werden die Servomotoren vorteilhaft mit einem elektronischen Getriebe auf exakt gleicher Geschwindigkeit gefahren. Dadurch ist sichergestellt, dass der Lamellenteppich gerade durch die Presseinheit fährt.

Bevorzugt wird das rechte Paar der Servomotoren im Vergleich zum linken Paar von Servomotoren mit einer geringfügig anderen Geschwindigkeit betrieben. Dadurch wird erreicht, dass die Spurlage des Lamellenteppichs in bzw. durch die Presseinheit exakt gesteuert werden kann. Insbesondere kann dadurch der Lamellenteppich sehr genau in der Spur gehalten werden.

Der Presseinheit ist vorteilhaft eine Sägeeinheit nachgeschaltet, mit der das Lamellenpaket in einzelne Platten gesägt werden kann.

Um einen hohen Durchsatz bzw. eine hohe Taktleistung zu erreichen, ist die Sägeeinheit mit wenigstens zwei Sägestationen versehen. Sie arbeiten vorteilhaft gleichzeitig, so dass aus dem Lamellenpaket gleichzeitig zwei Platten gesägt werden können.

Vorteilhaft ist wenigstens die eine Sägestation in Transportrichtung des Lamellenpaketes verstellbar, so dass die Breite der zu sägenden Platte eingestellt werden kann.

Bei einer einfachen Ausführungsform weisen die Sägestationen quer zur Transportrichtung des Lamellenpaketes verfahrbare Kreissägen auf. Mit ihnen ist ein problemloser Sägeschnitt sichergestellt.

Damit das Lamellenpaket sauber gesägt werden kann, wird es während des Sägevorganges in der Sägeeinheit eingespannt.

Zum Einspannen ist zumindest die eine Sägestation vorteilhaft mit wenigstens einem Niederhalter versehen, mit dem das Lamellenpaket niedergedrückt wird.

Bei einer bevorzugten Ausführungsform ist der Niederhalter für den Durchtritt eines Kreissägeblattes der Kreissäge mit einem Längsschlitz versehen. Durch ihn ragt das Kreissägeblatt während des Sägevorgangs.

Vorteilhaft wird das Lamellenpaket während des Sägevorganges außerdem auf wenigstens einer Auflage abgestützt, mit der das Lamellenpaket geringfügig von der Transporteinheit angehoben wird. Dadurch werden die vom Niederhalter auf das Lamellenpaket ausgeübten Druckkräfte nicht auf die Antriebselemente der Transporteinheit der Sägeeinheit weitergeleitet, wodurch die Antriebselemente geschont werden.

Die Kreissägen sind vorteilhaft an einem Laufwagen höhenverstellbar gelagert. Sind die Kreissägen nicht im Einsatz, werden sie am Laufwagen nach oben verstellt, so dass die Kreissägeblätter der Kreissägen nicht mit dem Lamellenpaket in Berührung kommen.

Der Laufwagen ist vorteilhaft längs eines Querträgers verfahrbar, der sich im Bereich oberhalb des Lamellenpaketes quer zu dessen Transportrichtung erstreckt.

Der Querträger ist in vorteilhafter Ausführung Teil eines Portalträgers, der die Transporteinheit der Sägeeinheit überbrückt.

Die Sägeeinheit ist zweckmäßig mit einer Transporteinheit versehen, welche die gesägten Lamellenplatten aus der Sägeeinheit transportiert.

Die Sägeeinheit ist vorteilhaft mit wenigstens einem in Transportrichtung des Lamellenpaketes verstellbaren Anschlag versehen. Dadurch ist es möglich, die Breite der zu sägenden Platte einfach einzustellen.

Wenn sowohl die eine Sägestation als auch der Anschlag in Transportrichtung des Lamellenpaketes unabhängig voneinander verstellbar sind, kann die Breite zweier zu sägender Lamellenplatten eingestellt werden. Mit den beiden Kreissägen der Sägestation können dann in einem Zuge zwei Platten gesägt werden, die gleiche, aber auch unterschiedliche Breiten haben können.

Der Transporteinheit der Sägeeinheit ist in bevorzugter Ausgestaltung eine Abtransporteinheit nachgeschaltet, mit der die gesägten Lamellenplatten beispielsweise einem Handhabungsgerät zugeführt werden, das die Lamellenplatten von der Abtransporteinheit abnimmt und beispielsweise auf Paletten stapelt.

Vorteilhaft ist im Bereich zwischen der Transporteinheit der Sägeeinheit und der Abtransporteinheit wenigstens eine Auslassschleuse angeordnet. Mit ihr können die Abfallteile, die am Ende jeder Vielfachplatte in der Sägeeinheit angefallen sind, ausgeschleust werden. Hierzu wird die Auslassschleuse vorteilhaft in eine Auslassstellung verstellt, in welcher der Transportweg von der Transporteinheit der Sägeeinheit zur Abtransporteinheit unterbrochen ist. In diesem Bereich können die Abfallteile von der Transporteinheit der Sägeeinheit beispielsweise in einen Sammelbehälter oder dergleichen fallen.

Die Auslassschleuse weist vorteilhaft wenigstens einen Schwenkarm auf, der mit einem vorzugsweise endlos umlaufenden Transportelement versehen ist. Der Schwenkarm ermöglicht eine einfache Verstellung, wenn ein Abfallteil ausgeschleust werden soll. Das Transportelement des Schwenkarmes stellt darüber hinaus sicher, dass die Lamellenplatten problemlos von der Sägeeinheit zur Abtransporteinheit transportiert werden.

Beim erfindungsgemäßen Verfahren können die Lamellen bei ihrer Zuführung zur Leimauftragseinheit auf wenigstens zwei Transportwege aufgeteilt werden. Beispielsweise können die Lamellen hinsichtlich ihrer Qualität auf die beiden Transportwege aufgeteilt werden. Die Lamellen können diesen unterschiedlichen Transportwegen dann programmgesteuert so entnommen werden, dass innerhalb des herzustellenden Lamellenpaketes die Lamellen in der vorgesehenen Reihenfolge hintereinander liegen. So kann das Lamellenpaket Lamellen mit einer geringeren Qualität sowie Lamellen mit einer hohen Qualität aufweisen. Die Lamellen mit hoher Qualität sind insbesondere an den Stellen innerhalb des Lamellenpaketes angeordnet, an denen beispielsweise im weiteren Verfahrensablauf ein Sägeschnitt oder bei der späteren Bearbeitung ein Profil hergestellt werden soll. An diesen Stellen befindet sich eine Lamelle mit hoher Qualität, die insbesondere keine Äste und dergleichen aufweist, die bei der Bearbeitung herausbrechen würden.

Vorteilhaft werden die Lamellenbreiten beim Einfahren über die Zuführeinheit mittels einer Breitenmessung erfasst. Daraus wird ein optimales Plattenbild für eine mehrfachbreite Platte so zusammengestellt, dass der verbleibende Rest an dieser Mehrfachplatte möglichst gering ist.

Vorteilhaft wird auch das Bild der Einzelplatten so zusammengestellt, dass innerhalb der Platte die gewünschten Lamellenqualitäten und am Rand der Einzelplatte stets eine Lamelle mit hoher Qualität angeordnet ist.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung ein Ausführungsbeispiel einer erfindungsgemäßen Anlage zur Herstellung von aus Lamellen gebildeten Platten,
- Fig. 2: in vergrößerter Darstellung einen Teil einer Zuführeinrichtung der erfindungsgemäßen Anlage,
- Fig. 3: in perspektivischer Darstellung einen weiteren Teil der Zuführeinrichtung der erfindungsgemäßen Anlage,
- Fig. 4: einen weiteren Teil der Zuführeinrichtung der erfindungsgemäßen Anlage,
- Fig. 4A und 4B: einen Etagenförderer der erfindungsgemäßen Anlage in zwei unterschiedlichen Lagen,
- Fig. 4C: in schematischer Darstellung eine zweite Ausführungsform des Etagenförderers,
- Fig. 5: den Übergabebereich zwischen der Zuführeinrichtung und einer Quertransporteinheit der erfindungsgemäßen Anlage,
- Fig. 6: den Übergabebereich gemäß Fig. 5 mit einer Seitenansicht der Quertransporteinheit,
- Fig. 7: in perspektivischer Darstellung eine in Transportrichtung der Lamellen hinter der Quertransporteinheit liegende Umlenkeinheit,
- Fig. 8: die Umlenkeinheit gemäß Fig. 7 in vergrößerter Darstellung,
- Fig. 9: in perspektivischer Darstellung den Einlaufbereich einer Presseinheit der erfindungsgemäßen Anlage,
- Fig. 9A: in schematischer Darstellung und in Seitenansicht den Einlaufbereich der Presseinheit,
- Fig. 10: die Presseinheit der erfindungsgemäßen Anlage in perspektivischer Darstellung,

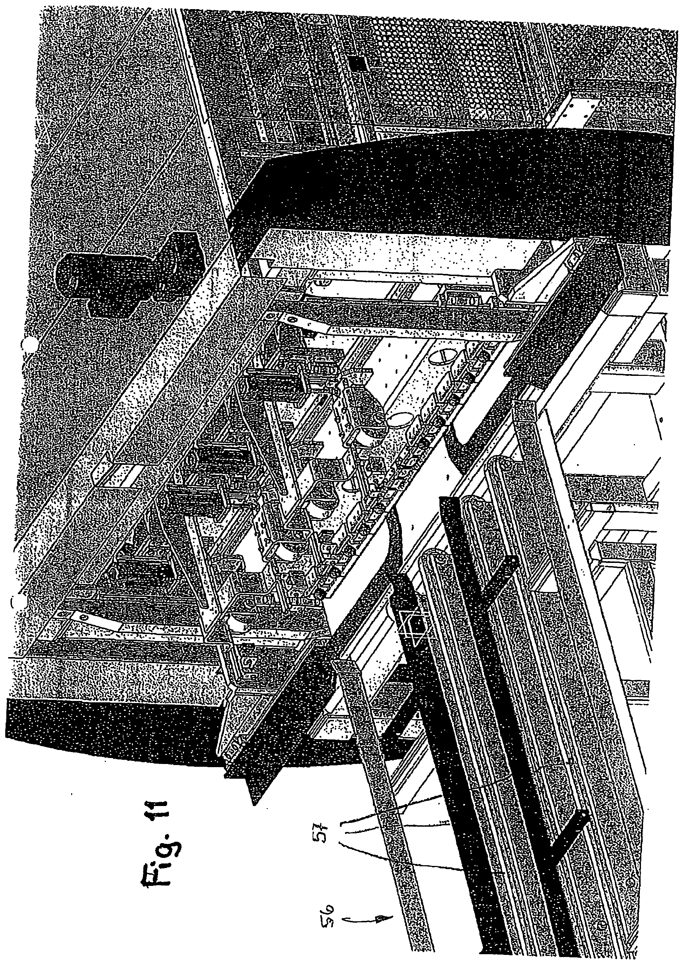

- Fig. 11: in vergrößerter Darstellung den Auslaufbereich der Presseinheit,
- Fig. 12: in perspektivischer Darstellung eine Sägeeinheit der erfindungsgemäßen Anlage,
- Fig. 12A: in schematischer Darstellung und in Seitenansicht die Sägeeinheit der erfindungsgemäßen Anlage,
- Fig. 13: in perspektivischer Darstellung einen Teil einer Abtransporteinheit der erfindungsgemäßen Anlage,
- Fig. 14: eine in der erfindungsgemäßen Anlage hergestellte Lamellenplatte, die aus Lamellen unterschiedlicher Qualität besteht,
- Fig. 15: ein Lamellenpaket, aus dem Lamellenplatten gesägt werden.

Mit der im Folgenden beschriebenen Anlage werden aus Holzlamellen Platten hergestellt. Die Anlage hat eine Zuführeinheit 1, mittels der die Lamellen einer Quertransporteinheit 2 zugeführt werden. Hier werden die zugeführten Lamellen einzeln in ihrer Längsrichtung quer zur Zuführrichtung transportiert. Die Quertransporteinheit 2 fördert die Lamellen einzeln nacheinander zu einer Umlenkeinheit 3, mit der die Lamellen quer zu ihrer Längsrichtung einer Presseinheit 4 zugeführt werden. Die in der Quertransporteinheit bei ihrem Transport an einer Längsseite mit Leim versehenen Lamellen werden in der Presseinheit 4 aneinander liegend zu Lamellenpaketen verpresst. Sie werden in einer Sägeeinheit 5 nach dem Austritt aus der Presseinheit 4 in einzelne Platten zersägt. Die zersägten Platten gelangen auf eine Abtransporteinheit 6, von der sie abgenommen und einer weiteren Verwendung zugeführt werden.

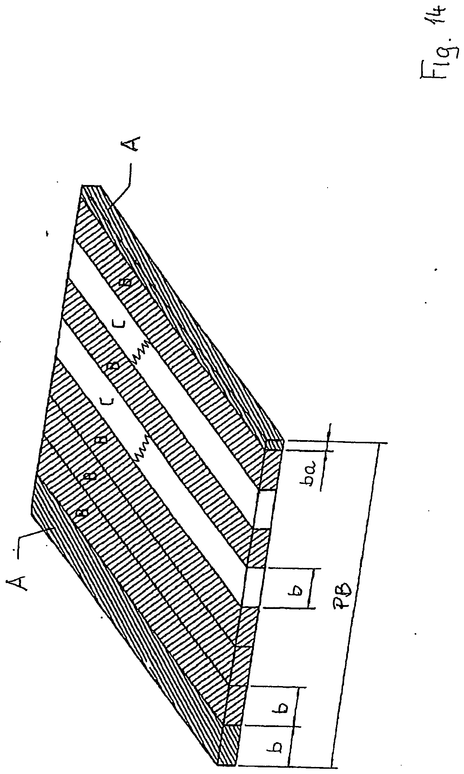

In Fig. 14 ist eine aus den Lamellen bestehende Platte dargestellt. Sie besteht aus Lamellen unterschiedlicher Qualität. Wesentlich ist, dass die an den beiden Außenseiten der Platte liegenden Lamellen A astfrei sind. Die zwischen diesen Außenlamellen A liegenden Innenlamellen B und C können Fehler aufweisen. Die Lamellen B haben eine der Plattenbreite entsprechende Länge. Die Lamellen C sind kürzer als die Plattenbreite. Innerhalb der Platte sind beispielhaft die Lamellen C über eine Keilzinkverbindung miteinander verbunden. Sämtliche Lamellen A bis C sind an ihren Stoßflächen miteinander verleimt.

Die eine Außenlamelle A sowie die Innenlamellen B und C haben jeweils eine Breite b. Diese Lamellen können entweder gleich breit oder auch unterschiedlich breit sein. Die Lamellenbreite b kann beispielsweise im Bereich zwischen 30 mm und 70 mm liegen. Die andere Außenlamelle A hat eine wesentlich kleinere Breite ba. Das Mindestmaß dieser Breite ba liegt beispielsweise bei 15 mm.

Die Plattenbreite PB kann beispielsweise zwischen 100 mm und 1.200 mm liegen. Da aus dem Lamellenteppich die Platten gesägt werden müssen, müssen in der Anlage die Lamellen in ihrer Breite und in ihrer Qualität erfasst werden. Außerdem müssen diese Lamellen so in noch zu beschreibender Weise aneinandergesetzt und in der Sägeeinheit 5 so zu den Platten geschnitten werden, dass die Platten an ihren beiden Außenseiten die astfreien Lamellen A aufweisen.

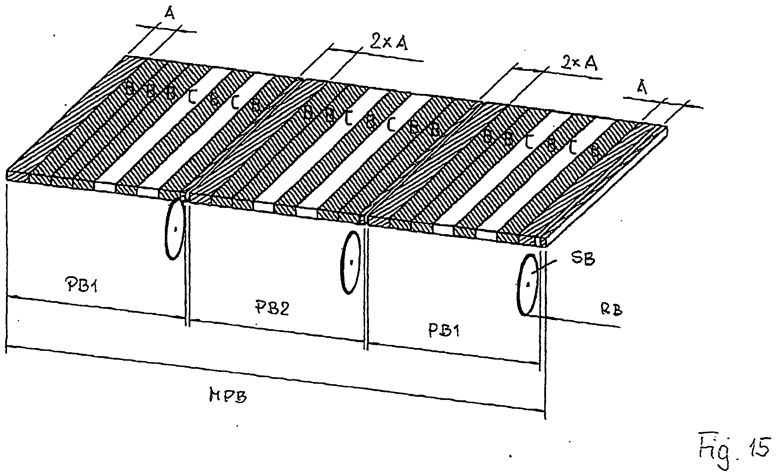

In Fig. 15 ist der Lamellenteppich dargestellt, aus dem die einzelnen Lamellenplatten gesägt werden. Innerhalb des Lamellenteppichs sind die Lamellen A bis C so angeordnet, dass mit der Säge, gekennzeichnet durch die Sägeblätter SB, der Lamellenteppich beispielhaft in die Lamellenplatten mit den Breiten PB1 und PB2 aufgeteilt wird. Im Bereich der Schnittfuge müssen sich die astfreien Lamellen A befinden, so dass sichergestellt ist, dass nach dem Sägeschnitt die entstehenden Lamellenplatten an ihren Außenseiten mit den astfreien Lamellen A versehen sind. Im beispielhaft dargestellten Ausführungsbeispiel kann die Plattenbreite PB beispielsweise zwischen 100 mm und 1.200 mm liegen. Die Gesamtlänge des Lamellenteppichs ist mit MPB (Multiplattenbreite) bezeichnet, die beispielsweise zwischen 2.000 mm und 50.000 mm betragen kann. Nach dem Sägeschnitt verbleibt nur noch ein schmales Abfallstück mit der Breite RB. In der Anlage können aufgrund der Vermessung jeder einzelnen Lamelle die Lamellen innerhalb des Lamellenteppiches so angeordnet werden, dass an den Sägeschnittstellen sich jeweils eine astfreie Lamelle A befindet und dass das Reststück möglichst schmal ist, so dass der Abfall gering ist.

Im Beispielsfall der Fig. 14 und 15 sind die Platten aus jeweils drei unterschiedlichen Lamellen A bis C gebildet. Möglich, dass die Lamellenplatten nur aus zwei Lamellenarten bestehen. Wesentlich ist lediglich, dass die beiden außenseitigen Lamellen A astfrei sind.

Im Folgenden werden die Lamellen mit 7 bezeichnet, wobei mit A und B deren Qualität angegeben wird. Die Qualität A bezieht sich auf Lamellen 7, die astfrei sind. Lamellen 7 mit der Qualität B können Äste oder sonstige Fehler aufweisen.

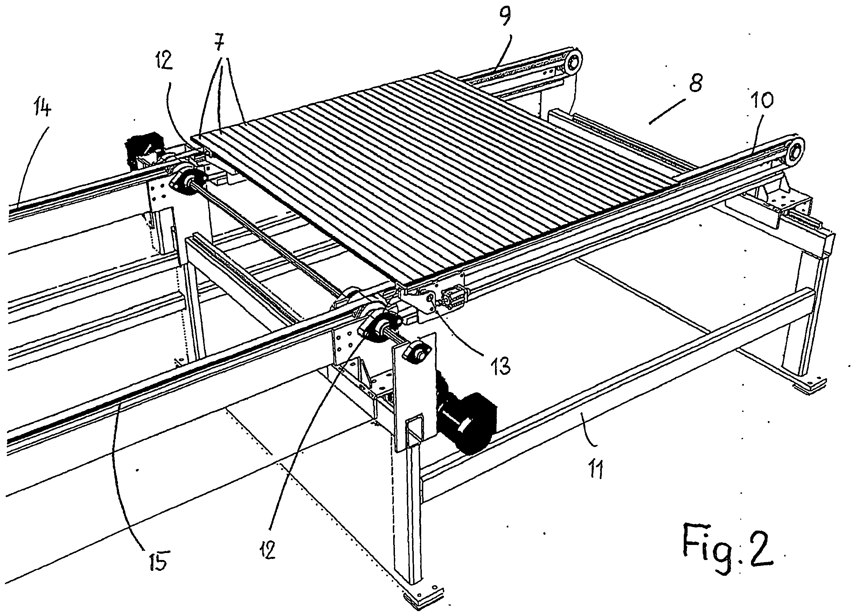

Die aus Holz bestehenden Lamellen 7 (Fig. 2) können am Aufgabeende 8 der als Längstransporteinheit ausgebildeten Zuführeinheit 1 von Hand zugeführt werden. Vorteilhaft jedoch sind die zu verarbeitenden Lamellen 7 auf Paletten gestapelt und werden mittels einer (nicht dargestellten) Handhabungseinheit auf die Zuführeinheit 1 am Aufgabeende 8 aufgelegt. Die Handhabungseinheit ist mit wenigstens einem Saugkasten versehen, mit dem die nebeneinander liegenden Lamellen als Einheit aufgenommen und auf die Zuführeinheit 1 gelegt werden können. Dieser Saugkasten erstreckt sich quer, vorzugsweise senkrecht zur Längsrichtung der Lamellen 7, so dass sie problemlos vom Stapel abgehoben und auf die Zuführeinheit 1 gelegt werden können. Sie weist zwei parallel zueinander liegende, endlos umlaufende Transportbänder 9, 10 auf, die an einem Gestell 11 vorgesehen sind und deren Abstand zur Anpassung an unterschiedliche lange Lamellen 7 verstellt werden kann. Im Ausführungsbeispiel wird das Transportband 10 relativ zum Transportband 9 auf dem Gestell 11 verschoben. Die Lamellenlage wird an ihrem in Transportrichtung vorderen Rand durch Anschlagfinger 12 rechtwinklig zur Transportrichtung ausgerichtet. Sie sind um eine horizontale Achse 13 schwenkbar am Gestell 11 gelagert. In der Anschlagstellung (Fig. 2) ragen die Anschlagfinger 12 in den Transportweg der Lamellen 7, so dass diese bei ihrem Transport durch die Transportbänder 9, 10 an den aufwärts geschwenkten Anschlagfingern 12 zur Anlage kommen. Die Lamellen 7 schlagen mit ihren über die Transportbänder 9, 10 seitlich vorstehenden Enden an den Anschlagfingern 12 an. Sobald die gewünschte Lamellenpaketbreite erreicht ist, werden die Anschlagfinger 12 um die Achsen 13 nach unten geschwenkt, wodurch die Lamellen freigegeben werden. Sie werden von den Transportbändern 9, 10 auf Transportbänder 14, 15 transportiert, deren Obertrum auf gleicher Höhe mit dem Obertrum der Transportbänder 9, 10 liegt. Dadurch ist ein kontinuierlicher Übergang der Lamellen 7 von den Transportbändern 9, 10 auf die Transportbänder 14, 15 gewährleistet.

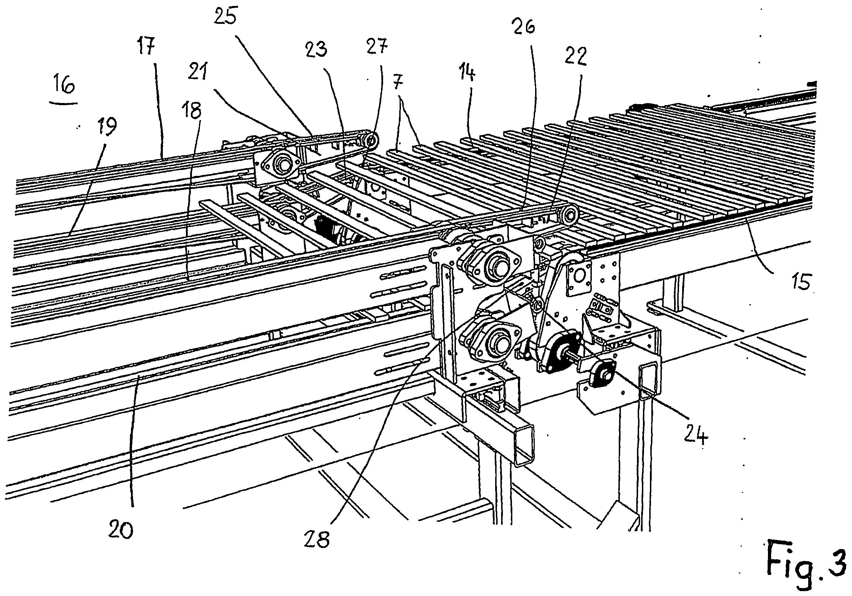

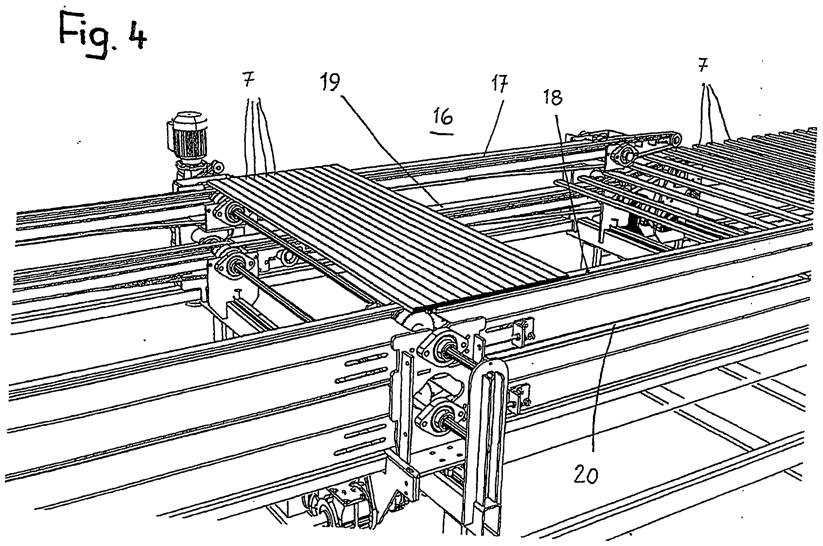

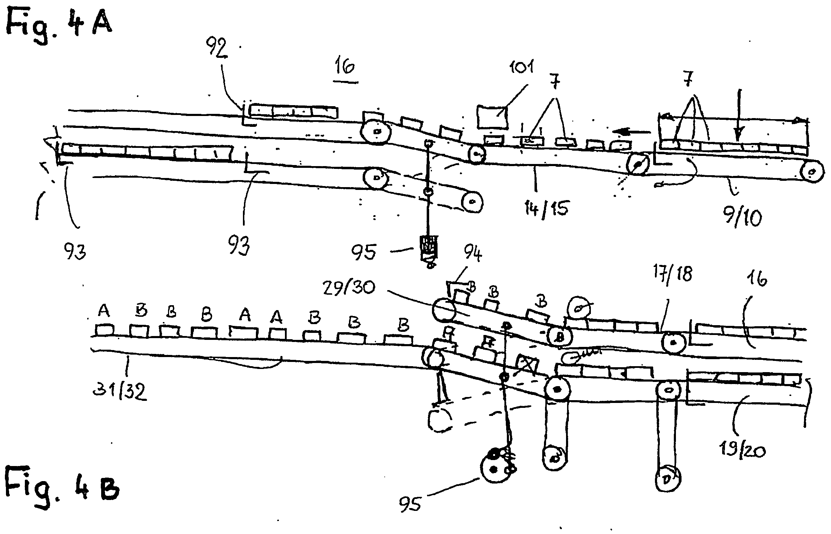

Die Transportbänder 14, 15 werden mit einer höheren Geschwindigkeit angetrieben als die Transportbänder 9, 10. Im Übergabebereich überlappen die Transportbänder 9, 10 und 14, 15 einander in Transportrichtung. Dadurch wird erreicht, dass die jeweilige Lamelle 7, sobald sie in diesem Übergabebereich auf die Transportbänder 14, 15 gelangt, mit einer höheren Geschwindigkeit transportiert wird als die nachfolgende Lamelle 7, die sich noch auf den langsamer laufenden Transportbändern 9, 10 befindet. Dadurch werden die Lamellen 7 auseinandergezogen, so dass sie nicht mehr mit ihren Längsseiten aneinanderliegen, sondern Abstand voneinander haben (Fig. 3). Je nach Geschwindigkeit der Transportbänder 14, 15 werden die Lamellen 7 beispielsweise auf einen Abstand von jeweils etwa 20 bis 25 mm auseinandergezogen. In dieser Lage werden die Lamellen 7 unter einer Zähl- bzw. Breitenmesseinrichtung 101 (Fig. 4A) transportiert. Aufgrund des Abstandes zwischen den Lamellen 7 können die Lamellen zuverlässig einzeln erkannt werden. Insbesondere kann die Breite der Lamellen 7 erfasst werden. Auch ist durch die Abstandsbildung eine zuverlässige Zählung der Lamellen sichergestellt. Die von der Messeinrichtung erfassten Daten werden abgespeichert und für die Herstellung der Lamellenpakete im weiteren Verlauf herangezogen.

Die auf die Transportbänder 9, 10 aufgelegten Lamellenpakete haben die gleiche Qualität A bzw. B. Das in Fig. 2 dargestellte Lamellenpaket hat beispielsweise Lamellen der Qualität A. Das nächste auf die Transportbänder 9, 10 aufzulegende Lamellenpaket hat dann beispielsweise die Qualität B. Welche Qualität die Lamellen der einzelnen Lamellenpakete haben, wird von der Messeinrichtung erfasst und gespeichert. Dadurch ist es möglich, im weiteren Transportverlauf der Lamellen durch die Anlage die Lamellen so hintereinander anzuordnen, dass beim Sägeschnitt die Lamellenpakete so getrennt werden, dass die entstehenden Lamellenplatten an ihren Außen seiten jeweils eine Lamelle der Qualität A aufweisen. Die Messung ist sehr einfach möglich, weil auf den Transportbändern 14, 15 die Lamellen einen ausreichend großen Abstand voneinander haben.

Die Lamellen 7 gelangen anschließend auf einen Etagenförderer 16, der zwei mit Abstand übereinanderliegende Transportwege für die Lamellen aufweist. Die beiden Transportwege werden jeweils durch eine Transporteinheit 17, 18 und 19, 20 gebildet, die durch endlos umlaufende Transportbänder gebildet sind. Das den Transportbändern 14, 15 zugewandte Ende des Etagenförderers 16 wird durch jeweils zwei als Schwingen ausgebildete Weichen 21, 22; 23, 24 gebildet, die jeweils mit einem endlos umlaufenden Transportelement 25, 26; 27, 28 in Form von Transportbändern versehen sind. Die Weichen 21 bis 24 werden zusammen jeweils so verstellt, dass die Lamellen 7 entweder auf die untere Transporteinheit 19, 20 oder auf die obere Transporteinheit 17, 18 gelangen. Die Lamellen 7 der einen Qualität A gelangen beispielsweise auf die untere und die Lamellen 7 der Qualität B auf die obere Transporteinheit 19, 20 und 17, 18. In der Darstellung gemäß Fig. 3 sind die Weichen 21 bis 24 aufwärts geschwenkt. Dadurch schließen die Antriebselemente 27, 28 der unteren Weichen 23, 24 an die Transportbänder 14, 15 an. Die Lamellen 7 der Qualität A werden dadurch über die unteren Weichen 23, 24 der unteren Transporteinheit 19, 20 zugeführt. Hat das Lamellenpaket die Lamellen 7 der Qualität B, werden die Weichen im Beispielsfall nach unten geschwenkt, so dass die Antriebselemente 25, 26 der oberen Weichen 21, 22 die Lamellen 7 mit der Qualität B von den Transportbändern 14, 15 übernehmen und aufwärts zu den Transporteinheiten 17, 18 des Etagenförderers 16 transportieren.

Der Abstand zwischen den Transportbändern 14 und 15, 17 und den Transporteinheiten 18, 19 und 20 bzw. 25 und 26 ist verstellbar, so dass eine Anpassung an unterschiedlich lange Lamellen 7 möglich ist.

Die Transporteinheiten 17, 18 und 19, 20 bilden zwei unabhängig angetriebene Förderbereiche zum Puffern und Weitergeben einer Lamellenlage, wobei in jedem Förderbereich Lamellen 7 einer Qualität A bzw. B liegen. Der Etagenförderer 16 hat im Ausführungsbeispiel zwei solche Förderbereiche. Er kann aber auch wenigstens einen weiteren Förderbereich aufweisen, so dass Lamellen 7 einer weiteren Qualität C eingesetzt werden können. Es ist aber auch möglich, in diesem Fall in zwei Förderbereichen beispielsweise Lamellen der Qualität B und im dritten Förderbereich Lamellen der Qualität A anzuordnen, da für die Lamellenplatten wesentlich mehr Lamellen der Qualität B als Lamellen der Qualität A benötigt werden.

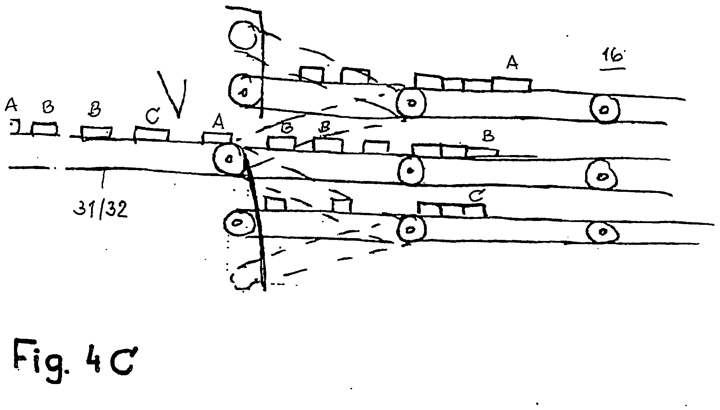

Die endlos umlaufenden Antriebselemente 25 bis 28 der Weichen 21 bis 24 schließen mit ihrem von den Transportbändern 14, 15 abgewandten Ende so an die Transporteinheiten 17, 18; 19, 20 an, dass die Lamellen 7 kontinuierlich auf die entsprechenden Transportbänder gelangen. Fig. 4 zeigt die Situation, dass auf den oberen Transportbändern der Transporteinheit 17, 18 eine Lamellenlage 7 beispielsweise der Qualität B vorgesehen ist und Lamellen 7 der Qualität A zu Beginn des Etagenförderers 16 auf die unteren Transportbänder der Transporteinheit 19, 20 transportiert werden.

Fig. 4A zeigt in Seitenansicht und in schematischer Darstellung, dass die Lamellen 7 auf den Transportbändern 9, 10 in der beschriebenen Weise aneinanderliegen und bei der Übergabe auf die Transportbänder 14, 15 vereinzelt werden. Die Weichen 21 bis 24 des Etagenförderers 16 sind so verschwenkt, dass die vereinzelten Lamellen 7 auf die obere Transportbahn 17, 18 gelangen.

Im Etagenförderer 16 werden die Lamellen 7 wieder zusammengeführt, so dass sie mit ihren Längsseiten aneinanderliegen, wie dies in Fig. 4 für die auf der oberen Transporteinheit 17, 18 befindlichen Lamellen dargestellt ist. Hierzu sind die beiden Transporteinheiten 17, 18 und 19, 20 mit Anschlägen 92, 93 (Fig. 4A) versehen, auf welche die Lamellen 7 auflaufen. Diese Anschläge können ähnlich wie die Anschlagfinger 12 schwenkbar am Gestell des Etagenförderers 16 gelagert sein. Die Anschläge werden in den Transportweg der Lamellen 7 bewegt, so dass die jeweils vorderste Lamelle 7 auf sie aufläuft.

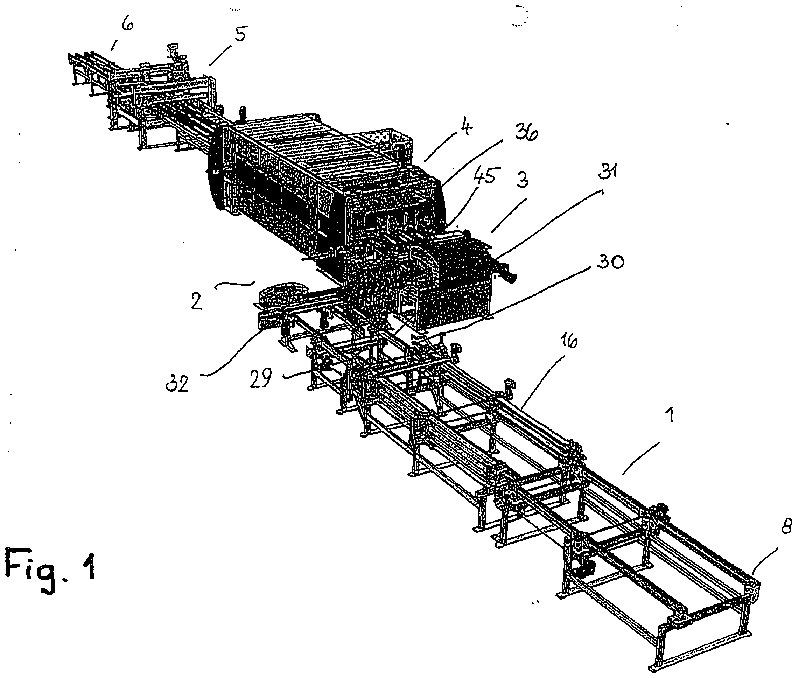

Der Etagenförderer 16 ist an seinem in Transportrichtung vorderen Ende mit weiteren, als Schwingen ausgebildeten Weichen versehen, von denen in Fig. 1 die oberen Weichen 29, 30 erkennbar sind. Die an diesem Ende vorgesehenen Weichen sind gleich ausgebildet wie die Weichen 21 bis 24. Sie werden wie die Weichen 21 bis 24 vorteilhaft durch einen gemeinsamen Antrieb gleichzeitig geschwenkt. Mit Hilfe der in Transportrichtung vorderen Weichen ist es möglich, die Lamellen 7 auf eine Transporteinheit 31, 32 zu transportieren, mit der die Lamellen der Quertransporteinheit 2 zugeführt werden. Die Transporteinheit 31, 32 wird durch endlos umlaufende Transportbänder gebildet (Fig. 1), auf der die Lamellen 7 der Quertransporteinheit 2 zugeführt werden. Die Weichen werden in die entsprechende Lage geschwenkt, so dass die Lamellen 7 von der unteren oder der oberen Transporteinheit auf die Transporteinheit 31, 32 transportiert werden.

Wie beispielhaft in Fig. 4B dargestellt, sind die Weichen 29, 30 so geschwenkt, dass die untere Transporteinheit 19, 20 mit der Transporteinheit 31, 32 verbunden ist. Dies hat zur Folge, dass die Lamellen 7 der unteren Transporteinheit 19, 20 des Etagenförderers 16 auf die unteren Weichen gelangen, auf denen sie wieder vereinzelt werden. Die Transportbänder der unteren Weichen haben eine höhere Transportgeschwindigkeit als
die Transportbänder der Transporteinheit 19, 20 des Etagenförderers 16. Dadurch gelangen die Lamellen 7, die beispielhaft die Qualität A haben, auf die Transportbänder der Transporteinheit 31, 32 mit Abstand voneinander.

Die Transportbänder der Transporteinheit 17/18 sind mit Servomotoren angetrieben. Damit können die Lamellen 7 in gewünschter Zahl auf die Weichen transportiert werden. Dabei ist jeweils eine Weiche in Übergabeposition zur nachfolgenden Transporteinheit 31/32. Die oder die anderen Weichen reichen bis zu entsprechenden Stoppanschlägen 94.

Damit können diese Weichen bereits mit entsprechend vielen Lamellen 7 gefüllt werden, während die Lamellen der aktiven Weiche ausfahren. Dies gibt eine sehr hohe Durchsatzleistung.

Wie anhand der Fig. 14 und 15 erläutert worden ist, werden die Lamellen 7 der Qualität A und der Qualität B in der erforderlichen Reihenfolge auf die Transportbänder der Transporteinheit 31, 32 gefördert. Dies bedingt, dass die Weichen 29, 30 jeweils aufwärts und abwärts so geschwenkt werden, dass die entsprechende Zahl von Lamellen 7 der Qualität A oder der Qualität B auf die Transporteinheit 31, 32 gelangt. Die Lamellen 7 der Qualität A befinden sich an den Stellen, an denen später in der Sägeeinheit 5 der Lamellenteppich in die einzelnen Lamellenplatten aufgeteilt wird.

Vorteilhaft können die Lamellen 7 im Bereich der Weichen 29, 30 hinsichtlich ihrer Breite und/oder ihrer Qualität nochmals vermessen werden. Die Ergebnisse werden in die Steuerung eingegeben, die Signale an die Sägeeinheit 5 weitergibt, damit der Lamellenteppich an der gewünschten Stelle aufgeteilt wird.

In den Fig. 4A und 4B sind beispielhaft Antriebe für die Weichen 21 bis 24, 29 und 30 dargestellt. So kann als Antrieb 95 eine Kolbenzylin
der-Einheit eingesetzt werden, deren Kolbenstange mit den Weichen gelenkig verbunden ist. Durch Ein- und Ausfahren der Kolbenstange werden die Weichen aufwärts bzw. abwärts bewegt. Der Antrieb 95 ist schwenkbar am Gestell gelagert.

Fig. 4B zeigt als weitere Möglichkeit einen Antrieb 95, der nach Art eines Kurbeltriebes ausgebildet ist. Auch mit einem solchen Antrieb lassen sich die Weichen in konstruktiv einfacher Weise nach oben und nach unten schwenken.

Fig. 4C zeigt beispielhaft einen Etagenförderer, der aus drei übereinander angeordneten Transportbahnen besteht. Die mittlere Transportbahn liegt fluchtend zu den Transportbändern der Transporteinheit 31, 32. Die oberen und die unteren Transportbänder können mit den Weichen mit den Transportbändern der Transporteinheit 31, 32 verbunden werden. Mit einem solchen Etagenförderer 16 ist es möglich, Lamellen 7 mit drei Qualitäten A bis C zu verwenden und diese Lamellen in der gewünschten Reihenfolge auf die Transporteinheit 31, 32 zu transportieren.

Die Antriebselemente 25, 26; 27, 28 der Weichen 21 bis 24, 29, 30 werden vorteilhaft mit Servomotoren angetrieben. Die Weichen 29, 30 takten programmgesteuert die jeweils richtige Zahl von Lamellen 7 aus.

Die Transportbänder der Weichen 21 bis 24, 29, 30 werden unabhängig voneinander angetrieben. Dadurch ist es beispielsweise möglich, dass Lamellen 7 aus dem Etagenförderer 16 von der einen Weiche 29, 30 auf die Transporteinheit 31, 32 gefördert werden, während in die andere Weiche 29, 30 die nächsten Lamellen 7 eingetaktet werden.

Die Lamellen 7 werden mit den Transportbändern der Transporteinheit 31, 32 gegen einen Anschlag 33 transportiert, der Teil der Quertransporteinheit 2 ist. Der Anschlag 33 wird beispielsweise durch eine Schiene gebildet, die sich in Längsrichtung der Lamellen 7 erstreckt. Der Anschlag 33 ist höhenverstellbar, damit er aus dem Bewegungsweg der Lamellen 7 nach oben verstellt werden kann. Durch den Anschlag 33 gelangen die Lamellen 7 mit ihren Längsseiten zur gegenseitigen Anlage.

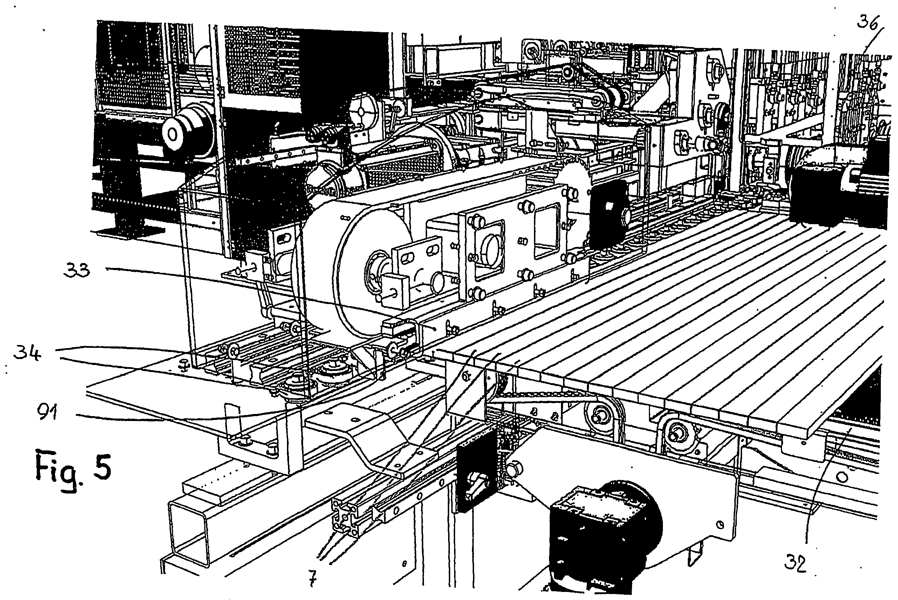

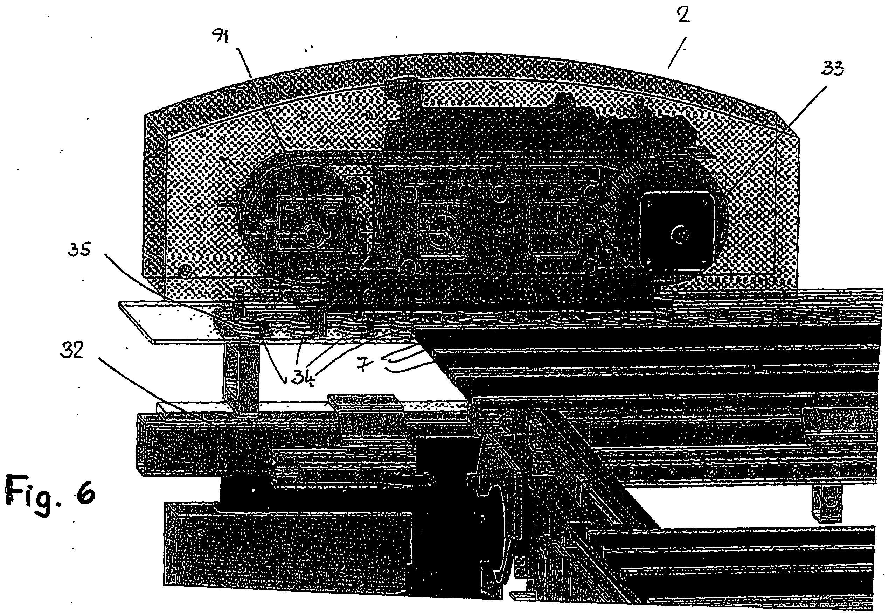

Im Bereich hinter dem Anschlag 33 befindet sich eine Seitenführung 34, die durch um vertikale Achsen drehbare Rollen gebildet ist, die in einer Reihe mit Abstand hintereinander angeordnet sind. Auf diese Rollen läuft die jeweils in Transportrichtung vordere Lamelle 7 bei angehobenem Anschlag 33 auf. Vor den Rollen befindet sich ein Mitnehmer 91 (Fig. 5 und 6), der in Transportrichtung der Quertransporteinheit 2 beschleunigt verfahrbar ist. Er wird mit einem (nicht dargestellten) Antrieb mit hoher Geschwindigkeit gegen die Stirnseite der jeweils mit ihrer Längsseite an den Rollen der Seitenführung 34 anliegenden Lamelle bewegt, die durch den Mitnehmer 91 in ihrer Längsrichtung in Richtung auf die Umlenkeinheit 3 transportiert wird. Die Rollen der Seitenführung 34 sind vorteilhaft mit einem Reibbelag 35 versehen, um die Lamellen 7 zuverlässig in ihrer Längsrichtung transportieren zu können. Die Lamellen 7 werden einzeln nacheinander längs der Rollen mit dem Mitnehmer 91 in ihrer Längsrichtung transportiert.

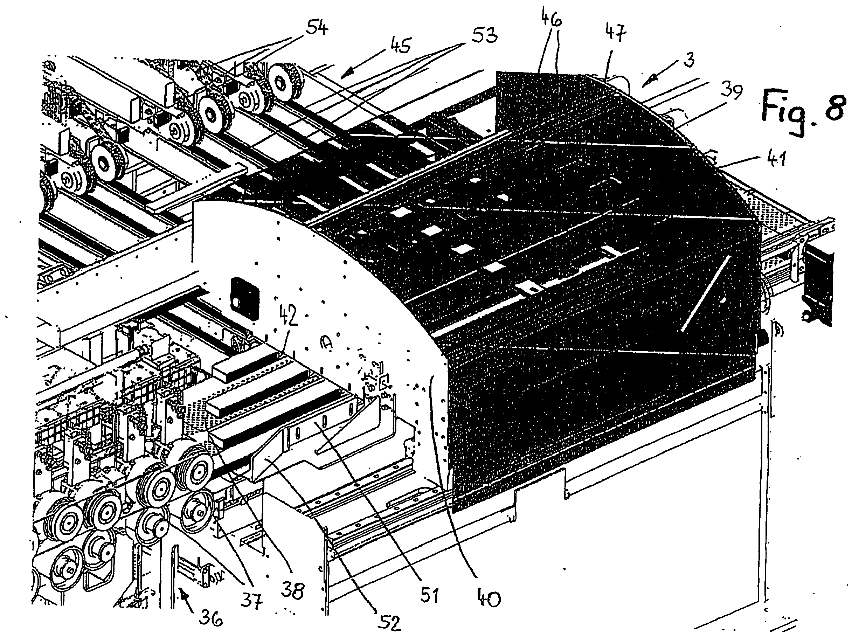

Bei ihrem Längstransport wird die eine Längsseite jeder Lamelle mit Leim beaufschlagt. Hierzu befindet sich im Bereich zwischen der Quertransporteinheit 2 und der Umlenkeinheit 3 eine Leimauftragseinheit 36, die wenigstens einen Auftragkopf aufweist. Mit ihm wird auf die eine Längsseite der Lamelle 7 bei ihrem Längstransport von der Quertransporteinheit 2 zur Umlenkeinheit 3 Leim kontinuierlich aufgebracht. Im Bereich der Leimauftragseinheit 36 werden die Lamellen 7 zwischen in Reihen übereinander angeordneten Antriebsrollen 37 (Fig. 8) transportiert, die jeweils um horizontale Achsen drehbar angetrieben werden. Die Antriebsrollen 37 liegen an der

Ober- und an der Unterseite der Lamellen 7 an. Ihre Längsseiten sind dadurch frei, so dass der Leim auf die entsprechende Längsseite der Lamelle 7 problemlos aufgebracht werden kann. Die Antriebsrollen 37 erfassen die vom Mitnehmer 91 zugeführten Lamellen 7 und beschleunigen diese. Die Lamellen 7 werden dadurch vom Mitnehmer 91 entfernt, so dass er zurück in die Ausgangslage gefahren werden kann, um die nächste Lamelle 7 den Antriebsrollen 37 zuzuführen.

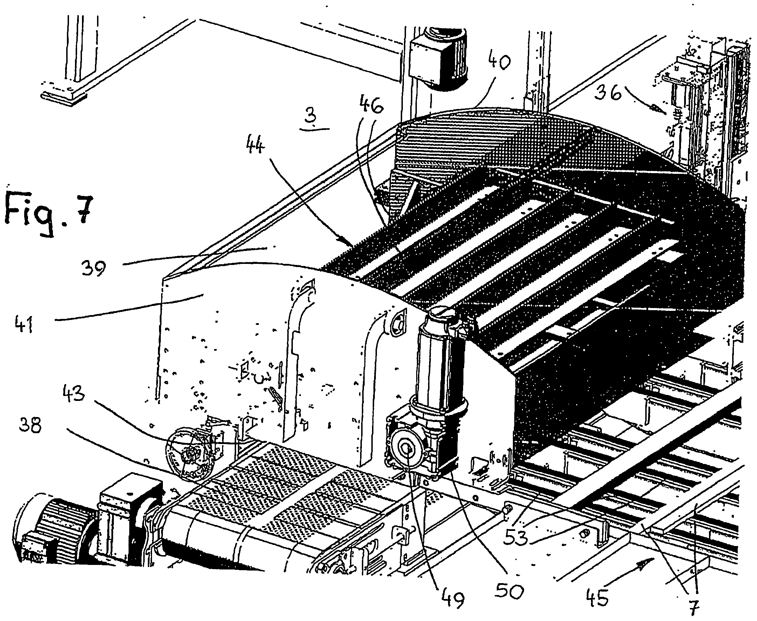

An die Reihe von Antriebsrollen 37 schließt ein endlos umlaufendes breites Transportband 38 an, auf dem die an einer Längsseite mit Leim beaufschlagten Lamellen 7 in die Umlenkeinheit 3 transportiert werden. Die Lamellen 7 liegen mit ihren Breitseiten auf dem Transportband 38 auf. Es erstreckt sich über beide Enden eines Gehäuses 39 der Umlenkeinheit hinaus (Fig. 7 und 8). In den Seitenwänden 40, 41 des Gehäuses 39 befindet sich jeweils eine Einlassöffnung 42 und eine Auslassöffnung 43. Beide Öffnungen 42, 43 haben im Ausführungsbeispiel rechteckigen Umriss. Das Transportband 38 erstreckt sich durch die Öffnungen 42, 43.

Im Gehäuse 39 ist eine Fördereinheit 44 untergebracht, mit der die Lamellen senkrecht zu ihrer Längsrichtung auf eine Transporteinheit 45 transportiert werden, mit der die Lamellen 7 der Presseinheit 4 zugeführt werden. Die Fördereinheit 44 weist mit Abstand hintereinander liegende Schiebeleisten 46 auf, die nahe ihren beiden Enden stehend auf endlos umlaufenden Bändern 47 befestigt sind. Die endlos umlaufenden Bänder 47 sind benachbart zu den Innenseiten der Gehäuseseitenwände 40, 41 vorgesehen. Die einen Umlenkrollen sitzen auf einer Welle 49, die über die Gehäuseseitenwand 41 ragt. An der Außenseite der Gehäusewand 41 ist ein Antriebsmotor 50 befestigt, mit dem die Welle 49 angetrieben wird. Das andere Ende der Welle 49 ist vorteilhaft in der Gehäuseseitenwand 40 gelagert.

Der Abstand zwischen benachbarten Schiebeleisten 46 ist geringfügig größer als die Breite der zu transportierenden Lamellen 7, die mittels des Transportbandes 38 zwischen jeweils zwei Schiebeleisten 46

geschoben werden. Damit die Lamellen 7 exakt zwischen die Schiebeleisten 46 transportiert werden, ist an die Einlassöffnung 42 (Fig. 8) eine Führungsleiste 51 angeschlossen, die sich zunächst entgegen Transportrichtung der Lamellen 7 erstreckt und deren freies Ende 52 schräg nach außen abgewinkelt verläuft. Dieses abgewinkelte Ende 52 sorgt dafür, dass die Lamellen 7, sollten sie nicht exakt zugeführt werden, beim Auftreffen auf dieses abgewinkelte Ende 52 in die richtige Lage bewegt werden, wenn die Lamellen durch die Einlassöffnung 42 in das Gehäuse 39 eintreten.

Im Gehäuse 39 befindet sich ein (nicht dargestellter) Anschlag, auf den die Lamellen 7 mit ihrer in Transportrichtung vorderen Stirnseite auftreffen. Auf diese Weise werden die Lamellen 7 genau ausgerichtet.

Das Transportband 38 hat eine wesentlich geringere Geschwindigkeit als die Antriebsrollen 37 und ist wesentlich breiter als der Abstand zwischen benachbarten Schiebeleisten 46. Dadurch verbleiben die Lamellen 7 über mehrere Querkontakte auf dem Transportband 38 und können vollständig am Anschlag ausgerichtet werden.

Da die Lamellen 7 je nach den gewünschten Abmessungen des zu fertigenden Lamellenpaketes unterschiedlich lang sein können, lässt sich die komplette Umlenkeinheit 3 in Transportrichtung der Lamellen 7 verschieben. Dadurch wird erreicht, dass die Lamellen 7 unabhängig von ihrer Länge exakt mittig der Presseinheit 4 zugeführt werden.

Im Bereich zwischen den Schiebeleisten 46 kann sich eine Auflage befinden, so dass die Lamellen 7 zwischen den Schiebeleisten 46 einwandfrei abgestützt werden. Sobald die jeweilige Lamelle 7 zwischen zwei Schiebeleisten 46 eingefahren und am Anschlag zur Anlage gekommen ist, wird der Antriebsmotor 50 eingeschaltet und die endlos umlaufenden Transportbänder 47 so bewegt, dass die Schiebeleisten 46 die Lamellen 7 in Fig. 8 nach links in Richtung auf die Transporteinheit 45 schieben. Vorteilhaft wird mit Sensoren überwacht, dass die Lamellen 7 vollständig zwischen benachbarte

Schiebeleisten 46 transportiert worden sind. Dann wird, ebenfalls vorteilhaft sensorgesteuert, der Antriebsmotor 50 eingeschaltet. Vorteilhaft ist es jedoch, wenn die Fördergeschwindigkeit der Transportbänder 47 und des Transportbandes 38 aufeinander abgestimmt wird, so dass ein quasi kontinuierlicher Bewegungsablauf erreicht wird. Damit die Lamellen 7 zuverlässig auf die Transporteinheit 45 gelangen, haben die Transportbänder 47 im Gehäuse 39 ein ausreichend langes, gerades Obertrum. Die Lamellen 7 werden auf diesem Obertrum im Wesentlichen horizontal verschoben, bis sie auf die Transporteinheit 45 gelangen. Sie hat mehrere parallel zueinander verlaufende endlos umlaufende Transportelemente 53in Form von Transportriemen, auf denen die Lamellen 7 aufliegen. Die Transportelemente 53 erstrecken sich bis zum Einlassbereich der Presseinheit 4. Die Transportrichtung der Transporteinheit 45 liegt parallel zur Transportrichtung der Zuführeinheit 1 sowie senkrecht zur Transportrichtung der Quertransporteinheit 2. Da die Transporteinheit 45 mehrere schmale Transportelemente 53 aufweist, können die Lamellen unabhängig von ihrer Länge einwandfrei abgestützt und der Presseinheit 4 zugeführt.

Bereits nach geringem Transportweg auf der Transporteinheit 45 gelangen die auf den Transportelementen 53 aufliegenden Lamellen unter obere Transportelemente 54 in Form endlos umlaufender Transportbänder, die den Transportelementen 53 mit Abstand gegenüberliegen. Der Abstand zwischen den übereinanderliegenden Transportelementen 53, 54 entspricht etwa der Dicke der Lamellen 7, die quer zu ihrer Längsrichtung transportiert werden.

Die Transporteinheit 45 weist bei einer einfachen Ausführungsform nur zwei mit Abstand nebeneinander liegende Transportelemente 53 auf. Sind mehr als zwei Transportelemente vorgesehen, dann werden die für den Transport der Lamellen 7 nicht benötigten Transportelemente vorteilhaft abgesenkt. Dadurch wird erreicht, dass die Lamellen 7 unabhängig von ihrer Länge stets nur auf zwei

Transportelementen 53 aufliegen. Auf diese Weise ist eine Anpassung an unterschiedlich lange Lamellen 7 möglich.

Die oberen Transportelemente 54 sind so ausgebildet und angeordnet, dass die Lamellen 7 zunächst nur geführt und erst im weiteren Transportweg etwas nach unten gedrückt werden. Dadurch wird auch erreicht, dass die jeweils vorderen Lamellen geringfügig abgebremst werden, so dass die nachfolgenden Lamellen an die jeweils vorderen Lamellen anschließen und auf diese Weise einen durchgehenden Lamellenteppich bilden. Die Lamellen 7 liegen mit ihren mit Leim beaufschlagten Längsseiten aneinander. Auch diese Transportelemente 54 können wahlweise abgesenkt werden, so dass die Lamellen 7 stets nur auf zwei Transportelementen 54 aufliegen.

Gelangt zum Beispiel eine zu dicke oder eine gewendete Lamelle 7 in den Bereich zwischen den beiden Transportelementen 53, 54, so werden die oberen Transportelemente 54 angehoben und der Antrieb gestoppt, so dass diese Lamelle entfernt werden kann.

In diesem Bereich zwischen den Transportelementen 53, 54 befindet sich vorteilhaft eine Überwachungseinheit, die die Ausrichtung der aneinander liegenden Lamellen überwacht. Diese Überwachungseinheit weist vorteilhaft ein Laserfotozellenpaar auf, mit dem die Lamellenausrichtung zuverlässig überwacht werden kann. Ergibt die Überwachung eine Fehlausrichtung der Lamellen, so kann vorteilhaft eine Zusatzausrichteinheit 87 eingeschaltet werden, mit der die Lamellen zwischen den Transportelementen 53, 54 entsprechend ausgerichtet werden können. Es ist möglich, dass weitere Sensoren, beispielsweise Fotozellenpaare vorgesehen sind, die diese Nachausrichtung überwachen und bei Bedarf die Presseinheit 4 anhalten.

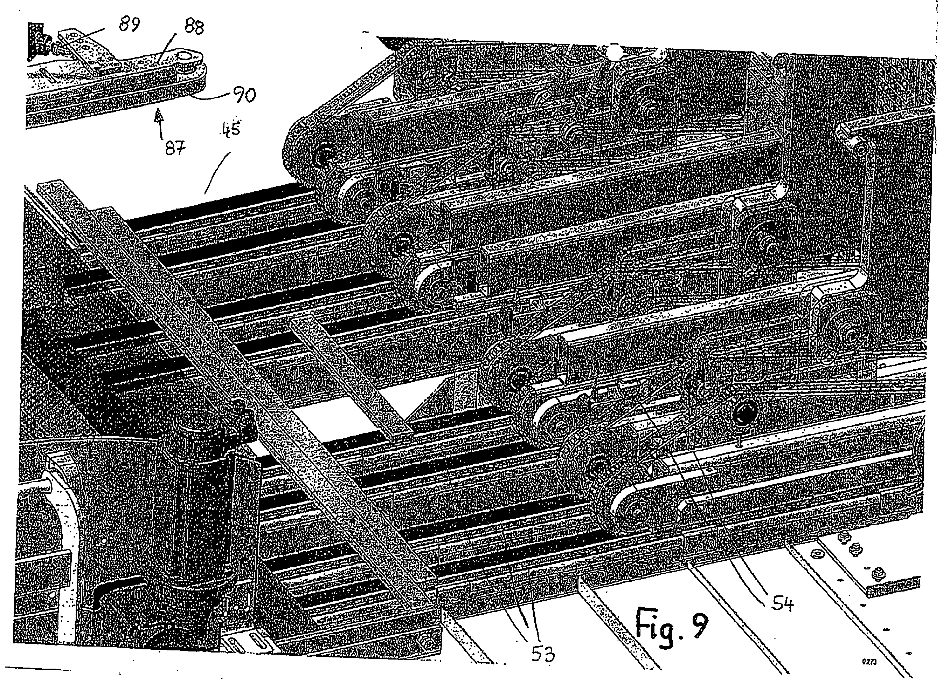

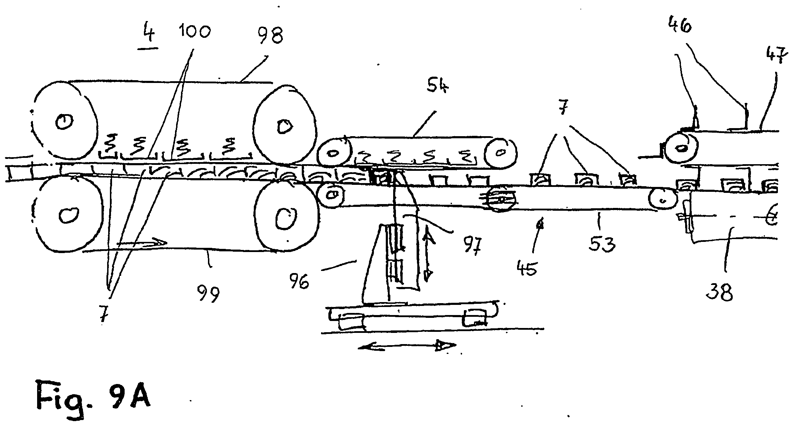

Die Zusatzausrichteinheit 87 ist als Schwenkeinheit ausgebildet und hat einen um eine vertikale Achse beweglichen Schwenkarm 88 (Fig. 9), der mit

Hilfe einer Verstellvorrichtung 89 verschwenkt werden kann. Die Verstellvorrichtung 89 wird vorteilhaft durch eine hydraulische Kolben-Zylinder-Einheit gebildet. Am Schwenkarm 88 ist ein endlos umlaufendes Band 90 vorgesehen, das im Einsatz der Zusatzausrichteinheit 87 angetrieben wird. Das Band 90 steht seitlich über den Schwenkarm 88 vor.

Die Zusatzausrichteinheit 87 befindet sich seitlich neben der Transporteinheit 45. Wenn benachbarte Lamellen 7 nicht genau zueinander ausgerichtet sind, dann wird durch die Überwachungseinheit die Zusatzausrichteinheit 87 eingeschaltet. Sie wird um die vertikale Achse in Richtung auf die Transporteinheit 45 geschwenkt. Der Schwenkarm 88 kommt mit dem Band 90 nahe seinem freien Ende mit den seitlich über die Transporteinheit 45 vorstehenden Enden der Lamellen 7 in Berührung und richtet sie gegeneinander aus. Das Band 90 wird so umlaufend angetrieben, dass es den Transport der Lamellen 7 in Richtung auf die Presseinheit 4 nicht beeinträchtigt.

An der der Zusatzausrichteinheit 87 gegenüberliegenden Seite kann für die Lamellen 7 ein in Transportrichtung sich erstreckender Längsanschlag vorgesehen sein.

Fig. 9A zeigt, dass im Bereich der Transporteinheit 45 wenigstens ein verstellbarer Schiebeschlitten 96 als Anschlag vorgesehen ist. Er kann in Transportrichtung und senkrecht hierzu verstellt werden. Der Schiebeschlitten 96 hat einen rechenförmigen Anschlag 97, der in Höhenrichtung in den Transportweg der Lamellen 7 verstellbar ist. Es wird dann in die Anschlagstellung aufwärts verschoben, wenn der in die Presseinheit 4 transportierte Lamellenteppich die vorgesehene Länge hat. Dann werden im Bereich der Transporteinheit 45 die nachfolgenden Lamellen 7 angehalten. Dies hat zur Folge, dass die zunächst mit
Abstand hintereinander liegenden Lamellen aufeinander auflaufen und mit ihren Längsseiten aneinanderliegen.

Im Anschluss an die Transportelemente 53, 54 sind in der Presseinheit 4 übereinanderliegende, nur schematisch dargestellte Plattenketten als Vorschub 98 vorgesehen, die nebeneinander liegende Kettenbahnen bilden und mit denen der Lamellenteppich weitertransportiert wird (Fig. 9A). Die unteren Plattenketten 99 laufen auf Gleitführungsleisten und bilden eine exakte Auflagefläche für den Lamellenteppich. Die oberen Plattenketten werden auf die Oberseite des Lamellenteppichs gedrückt. Hierfür sind Druckelemente 100 vorgesehen, die lückenlos aneinander schließen und durch Druckschläuche beaufschlagt werden. Die Druckschläuche werden mit Druckmedium, vorzugsweise Druckluft, beaufschlagt und hierbei elastisch gedehnt. Der Druck wird auf die Druckelemente weitergegeben, die auf die Platten der Plattenketten drücken. Die von den Plattenketten auf die Lamellen ausgeübte Druckkraft ist so hoch, dass Dickentoleranzen der Lamellen 7 durch plastische Verformung der Lamellen ausgeglichen werden. Zur Drucküberwachung werden vorteilhaft Proportionalventile eingesetzt, mit denen der Druck in den Druckschläuchen exakt eingestellt werden kann.

Beispielhaft sind jeweils sechs Kettenbahnen nebeneinander angeordnet, die jeweils mit einem Servomotor angetrieben werden. Die Servomotoren sind über ein elektrisches Getriebe miteinander gekoppelt und laufen somit absolut gleich. Es ist aber auch möglich, die Servomotoren unabhängig voneinander anzutreiben. Dadurch ist es möglich, durch unterschiedlich schnellen Antrieb ein schräg laufendes Lamellenpaket wieder auszurichten.

Wenn die Lamellen 7 und der aus ihnen gebildete Lamellenteppich eine größere Breite aufweisen, dann werden die oberen und unteren Plattenketten der Vorschübe 98, 99 vorteilhaft in zwei Teile aufgeteilt, die jeweils für sich mittels der Druckelemente beaufschlagt werden. In diesem Falle wird der Lamellenteppich in der rechten und der linken Hälfte, in Transportrichtung gesehen, jeweils druckbeaufschlagt. Diese Aufteilung hat zudem den Vorteil, dass die wirksame, auf den Lamellenteppich wirkende Vorschubkraft für beide Hälften des Lamellenteppichs unabhängig geregelt werden kann.

In diesem Falle sind die Kettenbahnen auch mit getrennten Antriebswellen versehen. Um einen gleichmäßigen Vorschub zu gewährleisten, sind die Antriebe der verschiedenen Antriebswellen wiederum vorteilhaft synchronisiert. Grundsätzlich ist es aber auch möglich, die beiden Kettenbahnen separat zu regeln, um damit zum Beispiel die Spursteuerung des Lamellenteppichs durch die Presseinheit 4 zu regeln.

Nach einem vorgegebenen Transportweg gelangt der Lamellenteppich durch ein HF-Feld, das zum Aushärten des Leims zwischen den Lamellen 7 herangezogen wird. Solche HF-Felder sind bei derartigen Presseinheiten bekannt und werden darum auch nicht näher erläutert. Eine untere Tischauflage bildet einen Minuspol der Hochfrequenz-Heizung und eine obere Druck- oder Niederhalteplatte einen Pluspol der Hochfrequenz-Heizung.

Nach dem Durchlaufen des HF-Feldes wird auf den Lamellenteppich eine Bremskraft ausgeübt. Die hierzu eingesetzte (nicht dargestellte) Bremseinheit hat einen auf Linearführungen aufgesetzten Rahmen, der durch die auf den Lamellenteppich ausgeübte Kettenvorschubkraft gegen Druckmesser, vorzugsweise Druckmessdosen, gedrückt wird. Die Höhe der Vorschubkraft bestimmt den auf die Leimfugen zwischen den Lamellen 7 wirkenden Pressdruck, der mit Hilfe der Druckaufnehmer zuverlässig überwacht werden kann. Der quer zur Transportrichtung des Lamellenteppichs in der Presseinheit 4 verlaufende Druckschlauch ist vorteilhaft mittig geteilt und wird rechts und links unabhängig von zwei Proportionalventilen angesteuert. Bei geringeren Breiten des Lamellenteppichs reicht auch ein einziger durchgehender Druckschlauch ist.

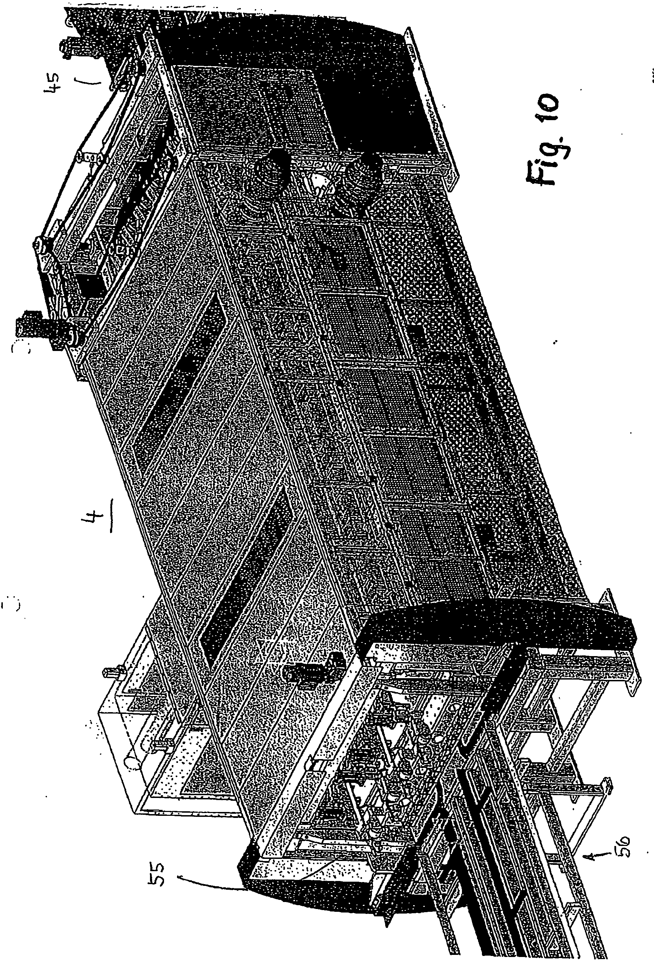

An das Austrittsende 55 (Fig. 10) der Presseinheit 4 schließt eine Transporteinheit 56 an, mit der der verpresste Lamellenteppich der Sägeeinheit 5 zugeführt wird. Die Transporteinheit 56 hat vorteilhaft mehrere endlos umlaufende Transportriemen 57, die parallel nebeneinander mit Abstand angeordnet sind. Sie erstrecken sich bis zur Sägeeinheit 5, die mit einer Transporteinheit 58 versehen ist. Sie weist ebenfalls mehrere mit Abstand nebeneinander angeordnete, endlos umlaufende Transportriemen 59 auf. Der Lamellenteppich wird von der Transporteinheit 58 übernommen.

Die Sägeeinheit 5 weist zwei Sägestationen 60, 61 auf, die unabhängig voneinander arbeiten. Mit ihnen ist es möglich, einen Lamellenteppich gleichzeitig in zwei Platten zu unterteilen. Die beiden Sägestationen 60, 61 habe jeweils ein Portal 62, 63, das die Transportriemen 59 überragt. Jedes Portal 62, 63 hat einen oberen Querträger 64, 65, der die vertikalen Säulen 66, 67; 68, 69 am oberen Ende verbindet.

Mit Abstand unterhalb des oberen Querträgers 64, 65 befindet sich ein weiterer Querträger 70, 71, der sich zwischen den beiden Säulen 66, 67; 68, 69 erstreckt und jeweils mit einem in seiner Längsrichtung sich erstreckenden Schlitz 72, 73 versehen ist. Durch die Schlitze 72, 73 ragt jeweils ein Kreissägeblatt 74, 75 einer Kreissäge 76, 77. Die Kreissäge 76, 77 ist längs des oberen Querträgers 70, 71 verfahrbar. Die Kreissägen 76, 77 sind an einem Laufwagen 78, 79 vorgesehen, der auf dem oberen Querträger 64, 65 verschiebbar geführt ist. Die Kreissägen 76, 77 können längs des Laufwagens 78, 79 in Höhenrichtung verschoben werden.

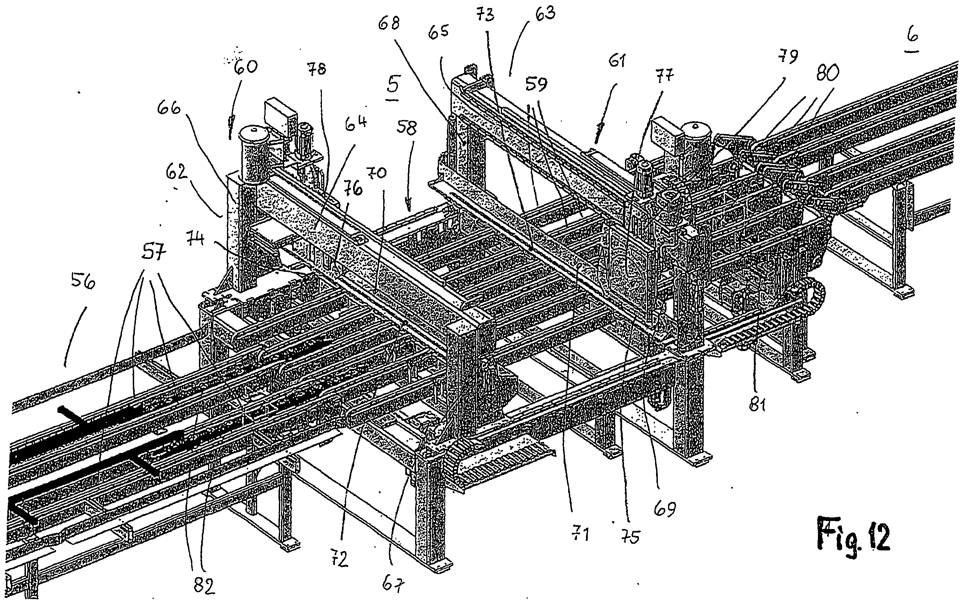

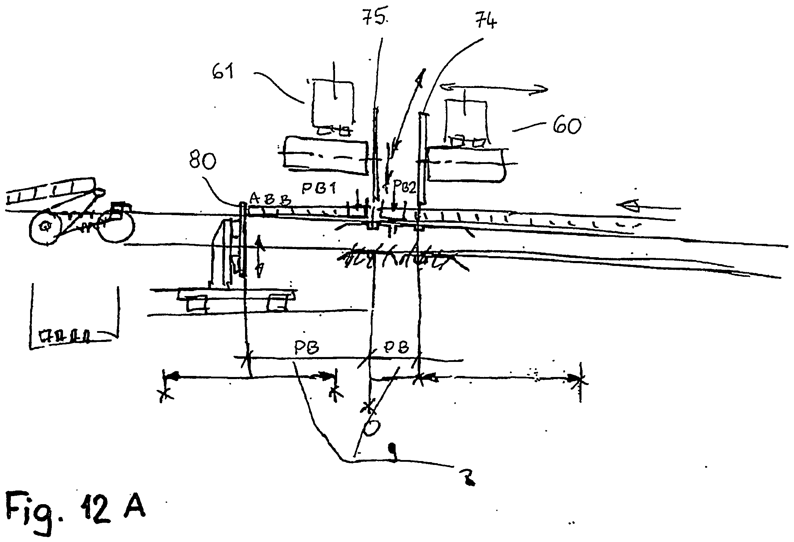

In der Ausgangsstellung befinden sich die Laufwagen 78, 79 mit den Kreissägen 76, 78 im Bereich des einen Endes der Querträger 64, 65; 70, 71. Vorteilhaft sind die beiden Kreissägen 76, 77 an zwei einander gegenüberliegenden Enden der beiden Sägestationen 60, 61 in der Ausgangslage angeordnet (Fig. 12). Die Kreissäge 76, 77 ist in dieser Ausgangsstellung in die obere Endlage verfahren. Um den jeweiligen Lamellenteppich aufzuteilen, wird die Kreissäge 76, 77 längs des Laufwagens 78, 79 in die untere Endstellung gefahren, in der das Kreissägeblatt 74, 75 durch den Längsschlitz 72, 73 im unteren Querträger 70, 71 ragt. Anschließend wird die Kreissäge 76, 77 mit dem Laufwagen 78, 79 längs der Querträger 64, 65; 70, 71 verfahren und hierbei der Lamellenteppich quer zu seiner Transportrichtung gesägt. Da die Sägeeinheit 5 zwei Sägestationen 60, 61 aufweist, können gleichzeitig zwei Sägeschnitte vorgenommen werden, wodurch die

Leistung der Anlage hoch ist. Am Ende des Sägeschnittes fahren die Kreissägen 76, 77 wieder aufwärts in ihre Ausgangsstellung.

Die Sägestation 61 ist ortsfest in der Anlage vorgesehen, während die Sägestation 60 vorteilhaft in Transportrichtung des Lamellenteppichs verstellt werden kann (Fig. 12A). Dadurch ist es möglich, den Abstand zwischen den Kreissägeblättern 74, 75 der beiden Sägestationen 60, 61 einzustellen. Dadurch kann die Breite PB2 der herzustellenden Lamellenplatte eingestellt werden. Beispielhaft beträgt der Verstellweg der Sägestation 60 1.200 mm.

Die Transporteinheit 58 der Sägeeinheit 5 ist mit in Transportrichtung vorderen Anschlägen 80 versehen, die sich zwischen benachbarten Transportriemen 59 der Transporteinheit 56 befinden und aus einer versenkten Lage aufwärts in eine Anschlaglage bewegt werden können. Die Anschläge 80 werden aufwärts verstellt, sobald ein Lamellenteppich in die Sägeeinheit 5 einfährt. Sobald der Lamellenteppich an den Anschlägen 80 zur Anlage kommt, erfolgt der Sägeschnitt mit den beiden Kreissägen 76, 77. Aus dem Lamellenteppich werden somit gleichzeitig zwei Platten gesägt. Sobald der Sägeschnitt beendet und die Kreissägen 76, 77 aufwärts in ihre Ausgangslage verstellt worden sind, werden die Anschläge 80 abgesenkt, so dass die gesägten Platten weitergefördert werden können.

Die Anschläge 80, welche die Lage des Lamellenteppichs während des Sägevorganges bestimmen, befinden sich in Transportrichtung des Lamellenteppichs vor der Sägestation 61. Die Anschläge 80 sind vorteilhaft in einem Träger 81 untergebracht, der sich senkrecht zur Transportrichtung der Tischplatten bzw. Lamellenteppiche erstreckt und aus dem die Anschläge 80 aufwärts ragen. Sie werden aus dem Träger 81 aufwärts geschoben, wenn sie ihre Anschlagstellung einnehmen sollen.

Die Anschläge 80 können in Transportrichtung verstellt werden, um auf diese Weise den Abstand zwischen den Anschlägen 80 und dem Kreissägeblatt 75 der Sägestation 61 festzulegen. Wie sich aus Fig. 12A ergibt, kann somit
die Breite PB der Lamellenplatte eingestellt werden. Beispielhaft beträgt der Verstellweg des Anschlages 80 in Förderrichtung der Lamellenplatte 1.300 mm.

Auf diese Weise kann durch Verstellen des Anschlages 80 und/oder der Sägestation 60 die jeweils herzustellende Breite PB der jeweiligen Lamellenplatte eingestellt werden. Die Platten können je nach Einstellung des Anschlages 80 bzw. der Sägestation 60 gleiche Breite, aber auch unterschiedliche Breite haben. Im beispielhaft dargestellten Fall der Fig. 12a hat die mittels des Kreissägeblattes 75 der Sägestation 61 herzustellende Lamellenplatte die Breite PB1, die wesentlich größer ist als die Breite PB2 der zweiten Lamellenplatte. Im Bereich der Kreissägeblätter 74, 75 befindet sich jeweils eine Lamelle 7 der Qualität A, wie anhand der Fig. 14 und 15 erläutert worden ist. Die in Transportrichtung vorderste Lamelle des Lamellenteppichs ist auf jeden Fall eine Lamelle mit der Qualität A, weil der Lamellenteppich an diesem vorderen Ende nicht gesägt wird.

Damit der Lamellenteppich während des Sägevorganges keine unerwünschten Bewegungen ausführt, wird er während des Sägevorganges eingespannt. Hierzu befinden sich im Bereich zwischen den Transportriemen 59 Auflagen 82 (Fig. 12), die sich von der Transporteinheit 56 aus in die Transporteinheit 58 erstrecken und etwa bis in Höhe der ersten Sägestation 60 reichen. Die Auflagen 82 werden vor dem Sägevorgang aufwärts bewegt, wodurch der Lamellenteppich angehoben wird. Gleichzeitig oder anschließend wird von oben auf den Lamellenteppich der Querträger 70, 71 aufgelegt. Er dient in diesem Falle als Druckschiene, die den Lamellenteppich gegen die angehobenen Auflagen 82 drückt. Somit wird der Lamellenteppich während des Sägevorganges zwischen den angehobenen Auflagen und den Querträgern 71, 72 eingeklemmt.

Die gesägten Platten werden mit der Transporteinheit 58 auf die Abtransporteinheit 6 transportiert. Die Anschläge 80 werden hierfür zunächst abgesenkt, so dass nach Einschalten der Transportriemen 59 die abgesägten

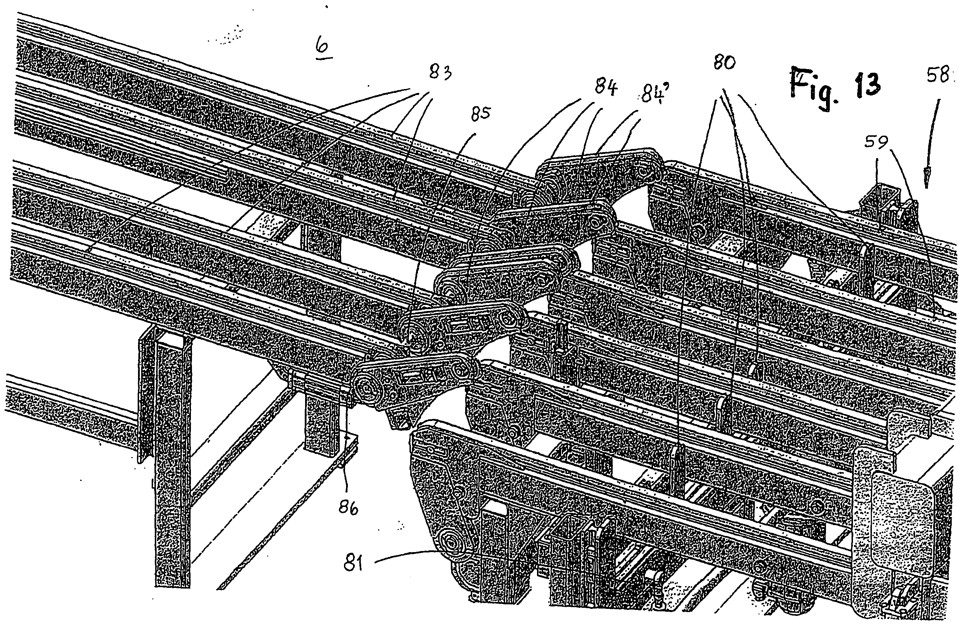

Platten weitertransportiert werden können. Die Abtransporteinheit 6 hat mehrere parallel nebeneinander endlos umlaufende Transportriemen 83 (Fig. 13), die die gesägten Platten übernehmen. An dem der Transporteinheit 58 zugewandten Ende ist die Abtransporteinheit 6 mit Schwenkarmen 84 versehen, die jeweils wenigstens einen endlos umlaufenden Transportriemen 84' aufweisen. Die Schwenkarme 84 sitzen vorteilhaft drehfest auf einer gemeinsamen Welle 85, die sich senkrecht zur Transportrichtung der Abtransporteinheit 6 erstreckt und mittels eines Antriebsmotores 86 zum Verstellen der Schwenkarme 84 betätigt werden kann. Die Schwenkarme 84 sind als einarmige Hebel ausgebildet und erstrecken sich mit ihrem freien Ende in den Bereich zwischen den Transportriemen 59 der Transporteinheit 58.

Wenn die abgesägten Platten auf die Abtransporteinheit 6 transportiert werden, befinden sich die Schwenkarme 84 in einer unteren, horizontalen Stellung, in welcher die Obertrums der Transportriemen 84' in einer Ebene mit den Obertrums der Transportriemen 59, 83 liegen. Beim Sägen treten Abfallstücke auf, die aus der Anlage aussortiert werden müssen. Zu diesem Zweck werden die Schwenkarme 84 aus der horizontalen Lage aufwärts in die in Fig. 13 dargestellte Lage geschwenkt. Das mittels der Transportriemen 59 transportierte Abfallstück fällt dann am Ende der Transporteinheit 58 nach unten, beispielsweise in einen Sammelbehälter. Nach dem Aussortieren des Abfallstückes werden die Schwenkarme 84 wieder in ihre horizontale Lage zurückgeschwenkt, so dass die nachfolgenden gesägten Platten auf die Transportriemen 83 der Abtransporteinheit 6 gelangen.

Im Bereich der Abtransporteinheit 6 befindet sich wenigstens ein Handhabungsgerät, mit dem die Platten aufgenommen und auf einem Stapelplatz neben der Abtransporteinheit 6 gestapelt werden können. Das Handhabungsgerät hat vorteilhaft einen Saugkasten, der an einem Greiferarm vorgesehen ist und mit dem die Platten problemlos von der Abtransporteinheit 6 abgehoben werden können. Die Abtransporteinheit 6 ist vorteilhaft mit (nicht dargestellten) Anschlägen versehen, auf welche die zugeführten

Platten auflaufen, solange das Handhabungsgerät noch mit dem Stapeln der jeweils zuvor gelieferten Platte beschäftigt ist. Sobald das Handhabungsgerät zur Aufnahme der nächsten Platte bereit ist, werden die Anschläge abgesenkt und der Antrieb der Transportriemen 83 eingeschaltet, so dass die nächste Platte zugeführt werden kann.

Die beschriebene Anlage zeichnet sich dadurch aus, dass mit sehr hoher Taktleistung aus Lamellen hergestellte Platten gefertigt werden können. Hierzu tragen der Etagenförderer 16 sowie die beiden Sägestationen 60, 61 in besonders vorteilhafter Weise bei. Von den beiden Sägestationen 60, 61 kann die in Transportrichtung des Lamellenteppiches rückwärtige Sägestation 60 vorteilhaft in Transportrichtung verstellbar angeordnet sein, so dass je nach Lage der Sägestation 60 die Breite der zweiten Platte variiert werden kann. Die Sägestation 61 ist ortsfest angeordnet und nimmt dadurch einen vorgegebenen Abstand zu den Anschlägen 80 ein. Dadurch hat die erste, aus dem Lamellenteppich gesägte Platte eine vorgegebene Breite.

Im Ausführungsbeispiel liegen die Sägeeinheit 5 und die Abtransporteinheit 6 auf der einen und die Zuführeinheit 1 auf der anderen Seite der Presseinheit 4. Es ist grundsätzlich auch möglich, dass auch die Sägeeinheit 5 und die Abtransporteinheit 6 auf der gleichen Seite der Presseinheit 4 angeordnet sind wie die Zuführeinheit 1. In einem solchen Falle liegen die Sägeeinheit 5 und die Abtransporteinheit 6 neben der Zuführeinheit 1.

Die verschiedenen Transporteinheiten können anstelle der beschriebenen Transportbänder oder -riemen auch andere Transportelemente aufweisen, mit denen die einzelnen Lamellen bzw. der Lamellenteppich bzw. die gesägten Platten zuverlässig transportiert werden können.

## Patentansprüche

1. Anlage zur Herstellung von Platten aus Lamellen (7) aus Holz,
mit wenigstens einer Zuführeinheit (1), mit der die Lamellen (7) in die Anlage transportierbar sind, mit wenigstens einer zum Aufbringen von Leim auf wenigstens eine Längsseite der Lamellen (7) vorgesehenen Leimauftragseinheit (36), mit wenigstens einer zum Verpressen der mit ihren Längsseiten aneinander liegenden Lamellen (7) vorgesehenen Presseinheit (4), und mit wenigstens einem Etagenförderer (16), der wenigstens zwei mit Abstand übereinander liegende unterschiedliche Transporteinheiten (17, 18; 19, 20) aufweist, die im Einlaufbereich des Etagenförderers 16 jeweils eine Weiche (21 bis 24) aufweisen, die zur Übernahme der Lamellen (7) von der Zuführeinheit (1) verstellbar ist, die zur Zuführung der Lamellen (7) zum Etagenförderer (16) endlos umlaufende Transportbänder (9, 10; 14, 15) aufweist, wobei der Etagenförderer (16) im Transportweg zur Leimauftragseinheit (36) vorgesehen ist, und **dadurch gekennzeichnet dass** die Weichen (21 bis 24) zusammen so verstellbar sind, dass die unteren Weichen (23, 24) in der einen Stellung die Lamellen (7) von den Transportbändern (14, 15) der Zuführeinheit (1) auf die untere Transporteinheit (19, 20) und die oberen Weichen (21, 22) in der anderen Stellung die Lamellen (7) von den Transportbändern (14, 15) der Zuführeinheit (1) auf die obere Transporteinheit (17, 18) des Etagenförderers (16) transportieren, und dass die Weichen (21 bis 24) endlos umlaufend ausgebildete Antriebselemente (25 bis 28) für die Lamellen (7) aufweisen, die unabhängig voneinander angetrieben werden.

2. Anlage nach Anspruch 1,
**dadurch gekennzeichnet, dass** der Etagenförderer (16) an wenigstens eine nachgeschaltete Transporteinheit (31, 32) anschließt, die einer Quertransporteinheit (2) für die Lamellen (7) vorgeschaltet ist, die eine Seitenführung (34) für die Lamellen (7) aufweist.

3. Anlage nach Anspruch 2,
**dadurch gekennzeichnet, dass** die Seitenführung (34) durch in Reihe nebeneinander angeordnete, um vertikale Achsen drehbare Rollen gebildet ist.

4. Anlage nach Anspruch 2 oder 3,
**dadurch gekennzeichnet, dass** die der Leimauftragseinheit (36) zugeführten Lamellen (7) durch wenigstens einen Mitnehmer (91) einzeln nacheinander in ihrer Längsrichtung längs der Seitenführung (34) transportiert werden.

5. Anlage nach Anspruch 4,
**dadurch gekennzeichnet, dass** die Lamellen (7) im Bereich der Leimauftragseinheit (36) zwischen drehbar angetriebene Antriebsrollen (37) transportierbar sind, die die Lamellen (7) an der Ober- und Unterseite erfassen.

6. Anlage nach einem der Ansprüche 1 bis 5,
**dadurch gekennzeichnet, dass** der Etagenförderer (16) im Auslaufbereich der Transporteinheiten (17, 18; 19, 20) weitere Weichen (29, 30) aufweist, die endlos umlaufend ausgebildete Antriebselemente (25 bis 28) für die Lamellen (7) aufweisen, die unabhängig voneinander angetrieben werden.

7. Anlage nach Anspruch 6,
**dadurch gekennzeichnet, dass** die Weichen (29, 30) im Auslaufbereich des Etagenförderers (16) so verstellbar sind, dass die Lamellen (7) von der unteren oder der oberen Transporteinheit (17, 18; 19, 20) auf die nachgeschaltete Transporteinheit (31, 32) transportierbar sind.

8. Anlage nach einem der Ansprüche 1 bis 7,
**dadurch gekennzeichnet, dass** der Abstand zwischen den nebeneinander angeordneten Weichen (21 bis 23; 29, 30) zur Anpassung an die aktuelle Länge der Lamellen (7) verstellbar ist.

9. Verfahren zur Herstellung von Platten aus Lamellen (7) aus Holz unter Verwendung einer Anlage nach einem der Ansprüche 1 bis 8, bei dem die Lamellen (7) einer Leimauftragseinheit (36) zugeführt werden, in der sie an mindestens einer Längsseite mit Leim beaufschlagt werden, bei dem die beleimten Lamellen (7) zum Lamellenpaket zusammengesetzt und anschließend verpresst werden, wobei die Lamellen (7) bei ihrer Zuführung zur Leimauftragseinheit (36) auf wenigstens zwei Transportwege aufteilbar sind, dass die Lamellen (7) programmgesteuert den Transportwegen so entnommen werden, dass innerhalb des herzustellenden Lamellenpaketes die Lamellen (7) in Bezug auf ihre Qualität in einer vorgegebenen Reihenfolge hintereinander liegen, **dadurch gekennzeichnet, dass** die Lamellenbreiten beim Einfahren über die Zuführeinheit (1) mittels einer Breitenmessung erfasst werden, dass die so erfassten Lamellen so zusammengestellt werden, dass bei einer Platte mit einer Mehrfachbreite (MPB) der verbleibende Rest möglichst gering ist, und dass das Bild der Einzelplatten derart zusammengestellt wird, dass innerhalb der Platte die gewünschten Lamellenqualitäten (B und gegebenenfalls C) und am Rand immer eine Lamelle mit hoher Qualität (A) angeordnet ist.

## Claims

1. An assembly for producing boards from wooden lamellae (7) with at least one feed unit (1) with which the lamellae (7) can be transported into the assembly, with at least one glue application unit (36) provided for applying glue onto at least one longitudinal side of the lamellae (7), with at least one pressing unit (4) for pressing together the lamellae (7) with their longitudinal sides lying on each other and with at least one stack conveyor (16) which has at least two different transport units (17, 18; 19, 20) arranged at a distance on top of each other, which in the inlet area of the stack conveyor (16) each have a set of switches (21 to 24) which can be adjusted for the taking over of the lamellae (7) by the feed unit (1), which, for supplying the lamellae (7) to the stack conveyor (16) has continuously circulating conveyor belts (9, 10; 14, 15),
wherein the stack conveyor (16) is provided in the transport path to the glue application unit (36) and **characterised in that** the sets of switches (21 to 24) are together adjustable in such a way that the lower set of switches (23, 24) in the one position transports the lamellae (7) from the conveyor belts (14, 15) of the feed unit (1) to the lower transporting unit (19, 20), and the upper set of switches (21, 22) in the other position transports the lamellae (7) from the conveyor belts (14, 15) of the feed unit (1) to the upper transport unit (17, 18) of the stack conveyor (16), and **in that**, for the lamellae (7), the sets of switches (21 to 24) have drive elements (25 to 28) which circulate continuously and are actuated independently of each other.

2. The assembly according to claim 1,
**characterised in that** the stack conveyor (16) is connected to at least one downstream transport unit (31, 32) which is upstream of a transverse transport unit (2) for the lamellae (7) which has a lateral guide (34) for the lamellae (7).

3. The assembly according to claim 2,
**characterised in that** the lateral guide (34) is formed by rollers rotating about vertical axes arranged in series next to each other.

4. The assembly according to claim 2 or 3,
**characterised in that** by means of at least one catch (91) the lamellae (7) supplied to the glue application unit (36) are individually transported one after each other in their longitudinal direction along the lateral guide (34).

5. The assembly according to claim 4,
**characterised in that** in the region of the glue application unit (36) the lamellae (7) can be transported between rotatably driven drive rollers (37) which seize the lamellae (7) on their upper and lower side.

6. The assembly according to any one of claims 1 to 5,
**characterised in that** exit area of the transport units (17, 18; 19, 20) the stack conveyor (16) has further sets of switches (29, 30) which for the lamellae (7) have drive elements (25 to 28) which circulate continuously and are actuated independently of each other.

7. The assembly according to claim 6,
**characterised in that** the sets of switches (29, 30) in the exit area of the stack conveyor (16) are adjustable in such a way that the lamellae (7) can be conveyed from the lower or the upper transpor unit (17, 18; 19, 20) to the downstream transport unit (31, 32).

8. The assembly according to any one of claims 1 to 7,
**characterised in** the distance between the sets of switches (21 to 23; 29, 30) arranged next to each other can be adjusted for adaptation to the current lengths of the lamellae (7).

9. A method for producing boards from wooden lamellae (7) using an assembly according to any one of claims 1 to 8, in which the lamellae (7) are supplied to a glue application unit (36) in which glue is applied onto at least one longitudinal side, in which the glued lamellae (7) are assembled into a lamellae package and then pressed together,
wherein while being supplied to the glue application unit (36) the lamellae (7) can be separated into two transport paths, the lamellae (7) are taken from the transport paths in a program-controlled manner is such a way that within the lamellae package to be produced, in relation to their quality the lamellae (7) lie one behind the other in a predetermined sequence, **characterised in that** during introduction via the feed unit (1), the lamella widths are recorded by means of width measurement, **in that** the thus recorded lamellae are put together in such a way that in a board with a multiple width (MPB) the remaining residue is as small as possible and that the picture of the individual boards is composed in such a way that within the board the desired lamella qualities (B and possibly also C) and on the edge a lamella with high quality (A) is always arranged.

## Revendications

1. Installation de fabrication de plaques en lamelles (7) de bois, avec au moins une unité d'alimentation (1), à l'aide de laquelle les lamelles (7) sont transportables dans l'installation, avec au moins une unité d'encollage (36) prévue pour appliquer de la colle sur au moins un côté longitudinal des lamelles (7), avec au moins une unité de pressage (4) prévue pour comprimer des lamelles (7) adjacentes par leurs côtés longitudinaux et avec au moins un convoyeur à étages (16) qui comporte au moins deux unités de transport (17, 18 ; 19, 20) différentes, superposées avec un écart, qui dans la zone d'entrée du convoyeur à étages (16) comportent chacune un aiguillage (21 à 24) qui est réglable pour reprendre les lamelles (7) à partir de l'unité d'alimentation (1) qui comporte des bandes transporteuses (9, 10 ; 14, 15) en rotation continue pour l'alimentation des lamelles (7) vers le convoyeur à étages (16),selon lequel le convoyeur à étages (16) étant prévu dans le trajet de transport vers l'unité d'encollage (36) et
**caractérisée en ce que** les aiguillages (21 à 24) sont réglables ensemble de telle sorte que dans l'une des positions, les aiguillages (23, 24) inférieurs transportent les lamelles (7) des bandes transporteuses (14, 15) de l'unité d'alimentation (1) sur l'unité de transport (19, 20) inférieure et dans l'autre position, les aiguillages (21, 22) supérieurs transportent les lamelles (7) des bandes transporteuses (14, 15) de l'unité d'alimentation (1) sur l'unité de transport (17, 18) supérieure du convoyeur à étages (16) et en e que les aiguillages (21 à 24) comportent des éléments d'entraînement (25 à 28) conçus en rotation continue pour les lamelles (7) qui sont entraînés indépendamment les uns des autres.

2. Installation selon la revendication 1,
**caractérisée en ce que** le convoyeur à étages (16) se raccorde sur au moins une unité de transport (31, 32) montée en aval, qui est montée en amont d'une unité de transport (2) transversale pour les lamelles (7) qui comporte un guidage latéral (34) pour les lamelles (7).

3. Installation selon la revendication 2,
**caractérisée en ce que** le guidage latéral (34) est formé par des galets rotatifs autour d'un axe vertical, placés côte à côte en rangée.

4. Installation selon la revendication 2 ou la revendication 3,
**caractérisée en ce que** les lamelles (7) alimentées vers l'unité d'encollage (36) sont transportées successivement, une à une dans leur direction longitudinale le long du guidage latéral (34) par au moins un entraîneur (91).

5. Installation selon la revendication 4,
**caractérisée en ce que** dans la région de l'unité d'encollage (36), les lamelles (7) sont transportables entre des galets d'entraînement (37) entraînés en rotation, qui saisissent les lamelles (7) sur la face supérieure et la face inférieure.

6. Installation selon l'une quelconque des revendications 1 à 5,
**caractérisée en ce que** dans la région de sortie des unités de transport (17, 18 ; 19, 20), le convoyeur à étages (16) comporte des aiguillages supplémentaires (29, 30) qui comportent des éléments d'entraînement (25 à 28) conçus en rotation continue pour les lamelles (7), qui sont entraînés indépendamment les uns des autres.

7. Installation selon la revendication 6,
**caractérisée en ce que** les aiguillages (29, 30) dans la région de sorte du convoyeur à étages (16) sont réglables de telle sorte que les lamelles (7) soient transportables de l'unité de transport (17, 18 ; 19, 20) inférieure et supérieure sur l'unité de transport (31, 32) montée en aval.

8. Installation selon l'une quelconque des revendications 1 à 7,
**caractérisée en ce que** l'écart entre les aiguillages (21 à 23 ; 29, 30) placés côte à côte est réglable pour s'adapter à la longueur actuelle des lamelles (7).

9. Procédé destiné à la fabrication de plaques en lamelles (7) de bois en utilisant une installation selon l'une quelconque des revendications 1 à 8, lors duquel on alimente les lamelles (7) vers une unité d'encollage (36) dans laquelle elles reçoivent de la colle sur au moins un côté longitudinal, lors duquel on assemble les lamelles (7) encollées en un paquet de lamelles et on les comprime par la suite, lors de leur alimentation vers l'unité d'encollage (36), les lamelles (7) pouvant être distribuées sur au moins deux trajets de transport, par commande programmée, les lamelles (7) étant prélevées dans les trajets de transport de telle sorte qu'à l'intérieur du paquet de lamelles qui doit être créé, les lamelles (7) soient placées les unes derrière les autres selon un ordre chronologique prédéfini au niveau de leur qualité,
**caractérisé en ce que** lors de l'introduction via l'unité d'alimentation (1), les largeurs des lamelles sont détectées à l'aide d'une mesure de la largeur, **en ce que** les lamelles ainsi détectées sont assemblées de telle sorte que sur une plaque à largeur multiple (MPB), le reste résiduel soit le plus restreint possible et **en ce que** l'apparence des plaques individuelles est assemblée de telle sorte qu'à l'intérieur se trouvent les qualités souhaitées des lamelles (B et le cas échéant, C) et sur le bord, soit toujours placée une lamelle de qualité supérieure (A).
